# EUROPÄISCHE PATENTSCHRIFT

(11) **EP 1 010 838 B1**
(45) Veröffentlichungstag und Bekanntmachung des Hinweises auf die Patenterteilung: **15.02.2006**
(21) Anmeldenummer: 99124795.8
(22) Anmeldetag: 14.12.1999
(51) Int. Cl.: E04G 1/15, B21D 39/03

(54) **Laufplanke aus Metall**
Metal scaffold board
Plancher d'échafaudage métallique

(30) Priorität: 19.12.1998 DE 19858969
(43) Veröffentlichungstag der Anmeldung: 21.06.2000
(73) Patentinhaber: Wilhelm Layher Vermögensverwaltungs-GmbH, 74363 Güglingen-Eibensbach (DE)
(72) Erfinder: Langer, Carolin, 74363 Güglingen (DE); Layher, Georg, 74336 Brackenheim (DE)
(74) Vertreter: Geitz Truckenmüller Lucht

(56) Entgegenhaltungen:
- EP-A- 0 815 980
- DE-A- 2 916 826
- DE-A- 19 515 062
- DE-U- 29 715 272

## Beschreibung

Die Erfindung betrifft eine Laufplanke aus Metall für Gerüste, Konsolen, Podien und dgl..

Laufplanken mit den Merkmalen bzw. Teilmerkmalen des Oberbegriffs des Patentanspruches 1 sind seit vielen Jahren in großen Stückzahlen erfolgreich am Markt eingeführt.

Aus der DE-PS 29 16 826 sind Laufplanken aus Stahlblech oder Aluminiumblech bekannt, deren Querverstärkungsprofile als U- bzw. C-förmige Querkappen gestaltet sind. Diese weisen einen horizontalen Oberschenkel und einen horizontalen Unterschenkel sowie eine stirnseitige Vertikalwand auf. Der horizontale Oberschenkel liegt unterhalb der Lauffläche und der horizontale Unterschenkel liegt an der oberen Horizontalfläche des mehrfach abgekanteten Längsverstärkungsprofils der beiden seitlichen Längsholme an. An dem stirnseitigen Vertikalsteg des Abschlußprofils sind Einhängeklauen mittels Schweißen unter Ausbildung von Schweißnähten befestigt. Die Längsversteifungsprofile der Längsholme enden vor dem stirnseitigen Vertikalsteg der Querkappen in einem Abstand, der der Tiefe der Seitenlaschen etwa entspricht. Die Querkappen sind an den übrigen Gerüstboden-Profilteilen ebenfalls unter Ausbildung von Schweißnähten angeschweißt.

Bei aus der Praxis bekanntgewordenen Laufplanken gemäß dieser Patentschrift weisen die Abschlußprofile außer dem Oberschenkel und dem Unterschenkel jeweils einen vertikalen Seitenschenkel auf, die an der vertikalen Innenwand des Längsholmprofiles anliegen. Die Querkappen sind in die mit der horizontalen Lauffläche und den vertikalen Wandteilen der Längsholmprofile gebildeten Gerüstboden-Profilstrukturen eingesteckt. Die Querkappen sind durch Verschweißen in der Weise festgelegt, daß die stirnseitige Vorderkante der Lauffläche im Bereich der stirnseitigen Oberkante der Querkappen mit einer durchgehenden bzw. mehrfach unterbrochenen Schweißnaht festgelegt ist, daß die stirnseitigen Vertikalkanten der Längsholmprofile zumindest im Bereich des Überganges des stirnseitigen Vertikalwandteils des Abschlußprofils zu dem unteren Horizontal-Querschenkel mittels einer Schweißnaht festgelegt sind, daß die unteren Horizontal-Querschenkel der Querkappen im Bereich ihrer seitlichen Stirnkanten mit der horizontalen Unterkante des Längsholmprofiles mittels Schweißnähten festgelegt sind und daß die nach innen zur Längsmitte der Laufplanke weisenden Seitenlaschen an ihren vertikalen Stirnkanten mit den vertikalen Wandteilen der Längsholmprofile ebenfalls mittels Schweißnähten festgelegt sind. Dadurch ergibt sich eine steife rahmenartige Gerüstboden-Profilstruktur, die den im rauhen Praxisbetrieb auftretenden statischen und dynamischen Belastungen mit Sicherheit über lange Zeit standhalten. Diese Konstruktion weist unter vielerlei Gesichtspunkten Vorteile auf, insbesondere braucht sich das Abschlußprofil nicht über die ganze Höhe der Laufplanke zu erstrecken, da es nicht so hohen Biegebeanspruchungen ausgesetzt ist wie die Längsholme. Das Abschlußprofil braucht im wesentlichen nur die Einhängeeinrichtungen zu tragen und die auftretenden Kräfte zu übertragen. Auf diese Weise lassen sich Laufplanken mit unterschiedlich hohen Längsholmen mit gleichen, auf das Gerüstsystem abgestimmten Abschlußprofilen versehen und braucht nicht für unterschiedlich hohe Längsholme auch unterschiedlich hohe Abschlußkappen oder Abschlußprofile vorzusehen. Die an den Übergangsbereichen von den Querkappen zu den Längsprofilen und der Lauffläche auftretenden Beanspruchungen, insbesondere die dort auftretenden Zug-, Druck- und Scherbeanspruchungen werden vorteilhaft durch die spezielle Gestaltung der Querkappen und insbesondere deren Befestigung mittels der in spezieller Weise angeordneten Schweißnähte ermöglicht.

Während früher die Schweißnähte von Hand angebracht wurden, sind heute vollautomatische Schweißanlagen im Einsatz. Allerdings sind diese Anlagen teuer. Die bisherige Schweißtechnik erfordert die Zugabe von Schweißmaterial und beim Verschweißen können giftige Dämpfe entstehen, die durch entsprechend aufwendige Absauganlagen abgeführt werden müssen. Bei dem Schweißen unter Ausbildung von Schweißnähten mit Zugabe von Schweißgut läßt sich eine mehr als nur lokale Erwärmung und ein schweißbedingtes Verziehen der Bauteile nicht in jedem Fall vermeiden. Das Verschweißen von Aluminium-Bauteilen ist besonders schwierig.

Diese Schweißtechnik hat sich in vielen Bereichen in der Praxis erfolgreich bewährt. Allerdings erscheint der erforderliche Herstellungs-, Material- und Kostenaufwand nicht unwesentlich reduzierbar.

Aus der DE-OS 195 15 062 sind Gerüstböden aus Stahlblech mit den Merkmalen des Oberbegriffes des Patentanspruches 1 bekannt. Die dort verwendeten Querverbindungskappen weisen horizontale Oberschenkel, vertikale Seitenschenkel, horizontale Unterschenkel und eine Vertikal-Außenwand auf. Die Querverbindungskappen sind mittels Hohl-, Abreiß-, oder Blindnieten mit der übrigen Gerüstboden-Profilstruktur verbunden. Dadurch läßt sich eine Verbindung der Querverbindungskappen mit den übrigen Gerüstboden-Profilteilen ohne Schweißung und damit lokale Überwärmung herstellen sowie bei geringem Gewicht, guter Stabilität für großen Längen und geringer Stapelhöhe den praktischen Bedürfnissen entsprechend optimiert gestaltet. Die genannten Kleinfügemittel müssen zur Montage durch an geeigneten Stellen der Querverbindungskappe und der Bodenprofilstruktur angebrachte Durchgangsbohrungen gesteckt werden und anschließend mit einem üblichen Umformvorgang umgeformt werden. Diese an sich günstige und seit vielen Jahren auch im Gerüstbau erfolgreich eingesetzte Verbindungstechnik erfordert jedoch zusätzliche Aufwendungen durch das Anbringen der Durchgangsbohrungen an hierfür geeigneten Stellen. Die Herstellung der Laufplanken ist relativ aufwendig. Denn die Querverbindungskappen müssen relativ zu den übrigen Gerüstboden-Profilteilen, insbesondere relativ zur Lauffläche und den Längsholmen mittels geeignet gestalteter Zusatzvorrichtungen genau positioniert werden, damit die an den gegenüberliegenden Wandteilen vorgesehenen Durchgangsbohrungen genau fluchten. Andernfalls ist das Durchstecken der Kleinfügeteile behindert oder überhaupt nicht möglich.

Gemäß dieser Druckschrift gestaltete, aus der Praxis bekannte Gerüstböden, sind beiderseits mit holmartigen Randprofilen gestaltet. Diese weisen unten liegende Längsverstärkungsholme, mit viertel- bzw. halbkreisförmig ausgebildeten Profil-Segmenten auf. Die Längsverstärkungsholme sind ferner mit einem unteren, sich in Längsrichtung erstreckenden Horizontal-Wandteil gebildet. Die Halbkreis- bzw. Viertelkreis-Profil-Segmente der Längsverstärkungsprofile enden in einem bestimmten Abstand vor den unteren horizontalen Querschenkeln der Querverbindungskappen. Der untere Horizontal-Wandteil der Längsverstärkungsprofile ist ebenengleich in Richtung auf das stirnseitige Ende der Gerüstböden weitergeführt. Der untere Horizontal-Wandteil der Längsverstärkungsholme greift dabei in einem schmalen und kurzen Überdeckungsbereich über die Außenfläche des unteren horizontalen Querschenkels des Querverbindungsprofils, wobei der Längs-Überdeckungsabstand kleiner ist als die Hälfte der Tiefe der Querschenkel. In diesem Überdeckungsbereich ist der Horizontal-Wandteil des Längsverstärkungsprofils mit dem Unterschenkel der Querverbindungskappe mit einem Blindniet befestigt, der durch beidseitig angebrachte Durchgangsbohrungen gesteckt und nachträglich verformt ist. Der Überdeckungsbereich ist zu klein, um mehr als einen Blindniet in tragfähigem Abstand sicher befestigen zu können. Ferner ist keine hinreichende Kraftüberleitung bzw. -Aufnahme bei Gerüstböden mit höheren Längsholmen bzw, mit von der Lauffläche relativ weit beabstandeten Längsverstärkungsprofilen möglich, die größeren Belastungen über längere Zeit sicher standhalten sollen. Die ebene Weiterführung des Horizontal-Wandteils des Längsverstärkungsprofils kann eine unnötige Gewichtserhöhung der Laufplanke bedeuten. Eine an den praktischen Anforderungen orientierte, kostengünstige und den jeweiligen Spannungs- und Kraftübertragungsverhältnissen angepaßte Gestaltung des Verbindungsbereiches bei Gerüstböden mit unterschiedlich hohen Längsholmen bei gleichbleibender Höhe der Querprofilkappen ist mit dieser Konstruktion nicht möglich.

Es sind ferner aus Aluminiumblech gebildete Laufplanken bekannt, die in vielen Merkmalen ähnlich gestaltet sind wie die Laufplanken gemäß der DE-PS 29 16 826. Die dabei vorgesehenen U- bzw. C-förmig gestalteten Querkappen weisen einen horizontalen Oberschenkel und einen horizontalen Unterschenkel auf. Seitenschenkel sind nicht vorgesehen. Die Querkappen sind mit den übrigen Gerüstboden-Profilteilen mit Hilfe von Blindnieten befestigt, die durch Durchgangslöcher der benachbarten Wandteile gesteckt und nachträglich umgeformt sind. Die Lauffläche ist mit den horizontalen oberen Querschenkeln der Querkappen mit sechs Blindnieten befestigt. Vier der Blindnieten sind im Bereich der vorderen Stirnkante der Laufflächen in einer Querreihe angeordnet und hinter den in den seitlichen Randbereichen angeordneten Blindnieten ist in Längsrichtung versetzt jeweils ein weiterer Blindniet vorgesehen.

Die Querkappen sind mit den beiden Längsholmen jeweils unter Verwendung eines separaten L-förmig ausgebildeten Winkel-Blechteils durch Blindnieten verbunden. Das Winkel-Blechteil liegt mit seinem Vertikalschenkel an der äußeren Oberfläche des vertikalen Wandteils der Längsholme an und übergreift mit seinem Unterschenkel die äußeren seitlichen Wandteilbereiche des unteren Horizontal-Querschenkels der Abschlußkappe. Zwischen dem Unterschenkel des Winkel-Blechteils und dem unteren Horizontal-Querschenkel des Abschlußprofils ist ein beidseitig jeweils an diesen Schenkeln anliegender horiontaler Wandteil des Längsverstärkungsprofils der Längsholme ausgebildet. Dadurch liegen in diesem Verbindungsbereich drei Wandteile übereinander. Diese sind mittels Blindnieten miteinander verbunden, die durch geeignete Durchgangsbohrungen hindurchgesteckt und nachträglich umgeformt sind. Das Winkel-Blechteil weist eine Breite auf, die eine in Längsrichtung der Gerüstböden versetzte Anordnung jeweils zweier Blindnieten ermöglicht. Die Breite des Winkel-Blechteiles entspricht etwa der Tiefe des unteren horizontalen Querschenkels der Abschlußkappe.

Die Herstellung dieser Gerüstböden ist aufwendig. Die Winkel-Blechteile erfordern eine separate Fertigung, Lagerung sowie Zuführung. Die genaue Positionierung der Winkel-Blechteile relativ zu den übrigen Gerüstboden-Profilteilen ist ebenfalls aufwendig. Dadurch daß der Unterschenkel des Winkel-Blechteils nicht direkt auf der Oberfläche des unteren Horizontal-Querschenkels der Abschlußkappen aufliegt, sondern der horizontale Wandteil der Längsverstärkungsprofile zwischen diesen mitbefestigt ist, sind für die Herstellung dieser Gerüstböden entweder unterschiedlich lange Nieten erforderlich, was einen erhöhten Herstellungs- und Logistikaufwand bedeutet oder müssen sämtliche Blindnieten die gleiche einheitliche Länge aufweisen, was einen unnötigen Materialeinsatz und zusätzliches Gewicht bedeutet.

In allen vorgenannten Konstruktionen sind die als Einhängeklauen gestalteten Einhänge-Hilfsmittel an den stirnseitigen Vertikalwandteilen der Querverbindungsprofile unter Ausbildung von Schweißnähten angeschweißt.

Es sind auch schmale Stahlroste mit einer Lauffläche und seitlich durch Abkanten gebildete Längsholme bekannt geworden. An deren Unterseite sind durch Abkanten gebildete Längsverstärkungsprofile ausgebildet. In die dadurch gebildete Profilstruktur der nur etwa 14 cm breiten Hilfsroste ist ein massives U-förmiges Stahl-Winkel-Eisen eingesteckt. Dieses weist ein stirnseitiges vertikales Wandteil und beiderseits je einen Seitenschenkel auf.

An der Unterseite der Lauffläche ist ein querschnittlich geschlossenes kastenförmiges Längsverstärkungsprofil längsmittig zentriert angeordnet. Dieses reicht bis zur Innenoberfläche des Vertikal-Wandteils des Winkeleisens und liegt dort mit zwei jeweils seitlich ausgebildeten Vertikallaschen an. Das kastenförmige Längsverstärkungsprofil ist mit sich zu den Seiten des Rostes erstreckenden schmalen Horizontalwandteilen ausgebildet, die an der Unterfläche der Lauffläche anliegen und dort befestigt sind.

Die Befestigung der Seitenlaschen des Stahl-Winkeleisens an den Vertikalwänden der Längsholme sowie die Befestigung der Horizontal- und der Vertikallaschen des kastenförmigen Längsversteifungsprofils mit der Lauffläche bzw. dem Vertikalwandteil des Stahl-Winkeleisens erfolgt durch Widerstands-Punktschweißen.

Die Seitenschenkel des Stahl-Winkeleisens sind an den Vertikalwänden der Längsholme durch drei beabstandete Widerstands-Schweißpunkte befestigt. Die Verbindungsstrukturen zweier der Widerstands-Schweißpunkte sind parallel zur vorderen Vertikalstirnkante der Längsholme ausgerichtet. In der Mitte zwischen diesen beiden Widerstands-SchweiQpunkten ist der dritte Widerstands-Schweißpunkt um einen etwa 1,5-fachen Abstand in Längsrichtung zur Gerüstboden-Mitte hin versetzt angeordnet.

Die horizontalen Unterflächen der Längsverstärkungsprofile der Längsholme sind ununterbrochen bis an das stirnseitige Ende des Rostes geführt. Horizontale Oberschenkel und/oder horizontale Unterschenkel weist das Stahl-Winkeleisen nicht auf. Diese Konstruktion ist bei langen Laufplanken mit üblicher Laufflächenbreite von wenigstens 300 mm, die erhebliche Belastungen über lange Zeit sicher aufnehmen und übertragen müssen, nicht geeignet.

Aus der DE-GM 94 18 062 ist eine Arbeitsbühne für Baugerüste oder dgl. aus Stahblech bekannt. Diese weist eine Lauffläche mit jeweils seitlich abgekanteten, sich in Längsrichtung der Arbeitsbühne erstreckenden vertikalen Gurtblechen auf. Die Gurtbleche sind jeweils außenseitig mit querschnittlich geschlossenen kastenförmigen Längsträgern verbunden. Diese sind als stranggepreßtes Hohlprofil ausgebildet. Ferner sind jeweils stirnseitig U- bzw. C-förmig ausgebildete Querträger vorgesehen. Diese weisen einen stirnseitigen vertikalen Profilsteg und einen oberen und unteren, von dem Profilsteg abgekanteten horizontalen Profilgurt auf. Seitenschenkel und dadurch geschaffene zusätzliche Befestigungsmöglichkeiten sind nicht vorhanden. Der obere und der untere Querschenkel des Querträgers weisen eine Breite auf, die dem Abstand zwischen den vertikalen Gurtblechen der Lauffläche entspricht, reichen also nicht über die gesamte Breite des Laufplankes. An dem vertikalen Profilsteg sind hakenförmige Einhängevorrichtungen durch Schweißen mit Schweißnähten festgelegt.

Die vertikalen Gurtbleche der Lauffläche sind mit den vertikalen Innenwandteilen der kastenförmigen Längsträger stoffschlüssig mit Hilfe von in Längsrichtung in einer Reihe angeordneten Widerstands-Punktschweißungen verbunden. Die Längsträger und die stirnseitig eingesteckten Querträger sind miteinander in den Ecken unter Ausbildung von Schweißnähten verschweißt. Diese unüblich gestalteten Gerüstböden sind aufwendig in der Herstellung. Hinweise auf eine günstigere Gestaltung der Verbindung zwischen den Querträgern und der übrigen Gerüstboden-Profilstruktur bei vollautomatischer Fertigungsmöglichkeit unter Verwendung eines einheitlichen Verbindungsverfahrens sind dieser Druckschrift nicht entnehmbar.

Der Erfindung liegt die Aufgabe zugrunde, Laufplanken der eingangs genannten Art unter vielgestaltigen Gesichtspunkten günstiger zu gestalten, insbesondere die Verbindung der Querversteifungsprofile mit den übrigen Gerüstboden-Profilteilen bei vollautomatischer Fertigungsmöglichkeit unter Berücksichtigung der sich aus den seitherigen Herstellungsgegebenheiten ergebenden Randbedingungen und des seitherigen, auf die Gerüst-Rastermaße abgestimmten Baukastensystems bei geringem Gewicht der Laufplanken ohne Einbuße der mit Sicherheit über lange Zeit ertragbaren Belastbarkeit im Hinblick auf die im rauhen Praxisbetrieb auftretenden statischen sowie dynamischen Beanspruchungen günstiger zu gestalten.

Dies wird erfindungsgemäß durch die Merkmale des Patentanspruches 1, insbesondere dadurch gelöst, daß
- wenigstens einer der sich gegenüberliegenden Wandteile vor dem Verbinden im Verbindungsbereich vorlochungs- und/oder vortrennfrei ausgebildet ist, wobei
- die Verbindungsmittel zur Verbindung der Querversteifungsprofile mit den Längsholmen und/oder dem Laufflächenblech unmittelbar mit elektrisch und/oder durch Druckkräfte induziertem Heiß- bzw. Kalt-Werkstoff-Fließen zumindest einer der Wandteile gebildeten, vollautomatisiert herstellbaren Verbindungsstrukturen ausgebildet sind und wobei;
- die Überlappungsbereiche und benachbarte Wandteile hinsichtlich der Zügänglichkeit der Fügewerkzeuge eine automatische Fertigung ermöglichende Gestaltung und Anordnung aufweisen und wobei
- die Längsholme an ihrem stirnseitigen Ende eine sich unterhalb des Laufflächenbleches in Querrichtung erstreckende, mit den Längsholmen einteilig gebildete und von dem Längsversteifungsprofil räumlich getrennte Verbindungslasche aufweisen,
- die mit dem Unterschenkel des Querversteifungsprofils mit wenigstens einem der die Verbindungsstrukturen aufweisenden Verbindungsmittel fest verbunden ist.

Dadurch, daß wenigstens einer der sich gegenüberliegenden Wandteile vor dem Verbinden im Verbindungsbereich vorlochungs- und/oder vortrennfrei ausgebildet ist, wird eine günstige Herstellungsmöglichkeit durch Einsparen von sonst erforderlichen zusätzlichen Arbeitsgängen erreicht. Dadurch, daß die Verbindungsmittel zur Verbindung der Querversteifungsprofile mit den Längsholmen und/oder der Lauffläche unmittelbar mit elektrisch und/oder im wesentlichen durch Druckkräfte induziertem Heiß- bzw. Kalt-Werkstoff-Fließen zumindest einer der Wandteile gebildeten Verbindungsstrukturen ausgebildet sind, die vollautomatisiert herstellbar sind, lassen sich giftige Dämpfe und aufwendige Absauganlagen sowie ein schweißflußbedingtes Verziehen der relativ dünnen Blech-Wandteile vermeiden. Durch diese Maßnahmen ist der Herstellungs-, Material- und Kostenaufwand nicht unwesentlich reduziert. Die Herstellung der Laufplanken ist auch deshalb günstiger, weil die Querversteifungsprofile relativ zur Lauffläche und den Längsholmen nicht exakt positioniert werden müssen, um ein bestimmungsgemäßes Anbringen der Verbindungsmittel zu ermöglichen. Dadurch, daß die Längsholme an ihrem stirnseitigen Ende eine sich unterhalb der Lauffläche in Querrichtung erstreckende, mit den Längsholmen einteilig gebildete und von dem Längsversteifungsprofil räumlich getrennte Verbindungslasche aufweisen, die mit dem Unterschenkel des Querversteifungsprofiles mit wenigstens einem der die Verbindungsstrukturen aufweisenden Verbindungsmittel fest verbunden ist, läßt sich eine besonders herstellungs- und kostengünstige, den in praxi auftretenden Spannungs- und Kraftübertragungsverhältnissen angepaßte Gestaltung des für die Gesamtsteifigkeit und die Rahmenbildung der Laufplanke wichtigen Stirn- und Eckverbindungsbereiches, insbesondere bei Laufplanken mit einer üblichen Laufflächenbreite von wenigstens 300 mm erzielen. Dadurch lassen sich große Belastungen über lange Zeit sicher aufnehmen und übertragen, wobei die Gestaltung, Lage und Anordnung der Verbindungslasche unter Beibehalt der sich aus den seitherigen Herstellungsgegebenheiten ergebenden Randbedingungen und des auf die Gerüstrastermaße abgestimmten Baukastensystems bei geringem Gewicht der Laufplanken in Verbindung mit der vorteilhaften Gestaltung und Anordnung der Überlappungsbereiche benachbarter Wandteile eine kostengünstige automatische Fertigung bei günstiger Zugänglichkeit der Fügewerkzeuge ermöglicht.

Vorteilhafterweise sind auch der Oberschenkel mit der Lauffläche und die Seitenschenkel mit den Längsholmen jeweils mit wenigstens einem der die Verbindungsstrukturen aufweisenden Verbindungsmittel fest verbunden. Dadurch läßt sich eine besonders günstige und stabile Verbindung des Querversteifungsprofils mit den übrigen Gerüstboden-Profilteilen unter Ausbildung einer steifen Rahmenbildung erreichen, welche durch Verwendung eines einheitlichen, vollautomatischen Fügeverfahrens eine besonders herstellungs- und kostengünstige Laufplanken-Konstruktion ohne Einbuße der mit Sicherheit über lange Zeit ertragbaren Belastbarkeit ermöglicht.

Zweckmäßigerweise weist die Verbindungslasche und der Unterschenkel eine aufeinander abgestimmte Fügefläche auf, die das gleichzeitige oder sequentiell beabstandete Anbringen von wenigstens zwei der Verbindungsstrukturen ermöglicht. Dadurch lassen sich auf engem Raum in Anzahl und Anordnung auf die lokal herrschenden Spannungs- und Kraftübertragungsverhältnisse abgestimmte Verbindungsstrukturen auch unter Verwendung einheitlicher Fügewerkzeuge anbringen. Dies bedeutet ferner den Vorteil von hinsichtlich Größe und Ausbildung einheitlichen Verbindungsstrukturen, welche eine exakte rechnerische Spannungs- und Beanspruchungsanalyse mittels moderner Rechenmethoden erleichert bzw. erst sinnvoll möglich macht.

Wenn alle sich jeweils gegenüberliegenden Wandteile Fügeflächen aufweisen, die so aufeinander abgestimmt gestaltet sind, daß sie das gleichzeitige oder sequentiell beabstandete Anbringen von wenigstens zwei der Verbindungsstrukturen ermöglichen, sind die vorstehenden Vorteile in besonderem Maße erreichbar.

Vorteilhafterweise sind die Fügeflächen der sich gegenüberliegenden Wandteile in den jeweiligen Verbindungsbereichen vor dem Verbinden im wesentlichen parallel und eben gestaltet. Dies erleichert das Anbringen der Verbindungsstrukturen bei leichter Zugängigkeit der Fügewerkzeuge und ermöglicht strukturell besonders günstig ausgebildete Verbindungsstrukturen.

Vorteilhafterweise ist die stirnseitige Vorderkante der Verbindungslasche im Bereich des stirnseitigen Endes des Unterschenkels des Querversteifungsprofiles ausgebildet und vorzugsweise sind die Verbindungsstrukturen im wesentlichen im Bereich der stirnseitigen Enden der Längsholme vorgesehen. Diese Maßnahmen ermöglichen eine unter Spannungsgesichtspunkten besonders günstige Übertragung der Kräfte von dem Querversteifungsprofil auf die übrige Laufplanken-Profilstruktur. Besonders günstige Kraftangriffs- bzw. Übertragungsmöglichkeiten und/oder günstige Werkstoffausnutzungs- und Spannungsverhältnisse bei geringem Gewicht der Laufplanken ergeben sich auch alleine oder in Kombination mit den nachstehend aufgeführten Maßnahmen. Dementsprechend kann vorgesehen sein, daß die Verbindungslasche eine Breite bzw. Tiefe aufweist, die der Tiefe bzw. Breite des Unterschenkels etwa entspricht. Ferner kann vorgesehen sein, daß die Verbindungslasche trapezförmig gestaltet ist, und zwar mit einer im Übergangsbereich zu den benachbarten Wandteilen des Längsholmes angeordneten Trapez-Basiskante, deren Breite etwa der Tiefe des Unterschenkels des Querversteifungsprofils entspricht sowie mit einer schräg nach vorn ausgebildeten Trapez-Schrägkante. Dabei sind zweckmäßigerweise die Übergänge der Trapezkanten sowie der Übergangsbereich der Verbindungslasche zu den anschließenden Wandteilen des Längsholmes abgerundet gestaltet. Ferner ist es vorteilhaft, wenn die Verbindungslasche den Unterschenkel des Querversteifungsprofils untergreift.

Ferner kann vorgesehen sein, daß die Querversteifungsprofile mit wenigstens zwei in Richtung der Längsachse der Laufplanke beabstandeten, die Verbindungsstrukturen aufweisenden Verbindungsmitteln mit der Verbindungslasche verbunden sind. Eine diesbezüglich besonders günstige Anordnung und Lage der Verbindungsstrukturen ergibt sich, wenn diese einen Abstand zueinander aufweisen, der dem 10- bis 15-fachen der Wandstärke der Verbindungslasche und/oder der Wandstärke des Querversteifungsprofils im Überlappungsbereich entspricht. Alternativ oder in Kombination zu dieser Maßnahme kann vorgesehen sein, daß die benachbarten Verbindungsstrukturen einen Abstand zueinander aufweisen, der etwa dem 0,4 bis 0,5-fachen der Tiefe des Unterschenkels des Querversteifungsprofiles entspricht. Ferner kann vorgesehen sein, daß die Verbindungsstrukturen symmetrisch zur Querachse des Querversteifungsprofils angeordnet sind und/oder von den vertikalen Außenflächen der Längsholme einen Abstand aufweisen, der etwa dem Abstand zwischen den benachbarten Verbindungsstrukturen entspricht. Zweckmäßigerweise sind die Seitenschenkel und/oder die Querschenkel rechteckförmig gestaltet. Die Verbindung der Seitenschenkel des Querversteifungsprofiles mit den Längsholmen erfolgt vorteilhafterweise mit drei dreieckförmig zueinander angeordneten Verbindungsstrukturen, wobei zweckmäßigerweise zwei der drei Verbindungsstrukturen etwa parallel zur Längsachse der Laufplanke ausgerichtet und unterhalb der dritten Verbindungsstruktur angeordnet sind. Dabei kann zweckmäßigerweise vorgesehen sein, daß die beiden unteren Verbindungsstrukturen einen Abstand voneinander aufweisen, der etwa der Tiefe der Unterschenkel des Querversteifungsprofiles entspricht und/oder daß die stirnseitig angeordnete Verbindungsstruktur von dem stirnseitigen Ende des Seitenschenkels des Querversteifungsprofiles einen Abstand aufweist, der etwa dem Abstand der dritten Verbindungsstruktur von den beiden unteren Verbindungsstrukturen entspricht. Alternativ oder in Kombination hierzu kann vorgesehen sein, daß die beiden unteren Verbindungsstrukturen von der unteren Kante der Seitenschenkel bzw. der Unterschenkel des Querversteifungsprofils einen Abstand aufweisen, der dem Abstand der stirnseitigen Verbindungsstruktur vom stirnseitigen Ende der Seitenschenkel etwa entspricht.

Besonders vorteilhaft ist es, wenn die drei zur Verbindung der Seitenschenkel mit den Längsholmen vorgesehenen Verbindungsstrukturen so angeordnet sind, daß ein gleichseitiges Dreieck gebildet ist.

Die Verbindung des Oberschenkels mit dem Laufflächenblech erfolgt zweckmäßigerweise mit drei parallel zur Stirnkante der Lauffläche und in einer Reihe angeordneten Verbindungsstrukturen, die zweckmäßigerweise von der Stirnkante der Lauffläche einen Abstand aufweisen, der etwa dem 6- bis 9-fachen der Wandstärke der Lauffläche im Verbindungsbereich entspricht.

Besonders vorteilhaft ist es, wenn die Verbindungsmittel zur Verbindung der Querversteifungsprofile mit den Längsholmen und/oder der Lauffläche unmittelbar mit elektrisch und/oder im wesentlichen durch Druckkräfte induziertem Heiß- bzw. Kalt-Werkstoff-Fließen jedes der Wandteile gebildeten, vollautomatisiert herstellbaren Verbindungsstrukturen ausgebildet ist. Dies ermöglicht eine besonders günstige vollautomatische Fertigungsmöglichkeit unter Verwendung eines einheitlichen Fügeverfahrens für die Verbindung des Querversteifungsprofils mit der übrigen Gerüstboden-Profilstruktur.

Von besonderem Vorteil ist es auch, wenn die Verbindungsstrukturen mit den sich gegenüberliegenden Wandteilen selbst ausgebildet sind. Dies ermöglicht eine günstige Herstellung und Gestaltung, ohne daß Zusatzwerkstoffe und/oder Hilfsfügeteile erforderlich wären.

Ferner ist es vorteilhaft, wenn die Verbindungsstrukturen nicht über die freien Oberflächen der miteinander verbundenen Wandteile hervorstehen. Dadurch wird die Handhabung der gesamten Laufplanke erleichtert und die Verletzungsgefahr wird minimiert.

Zweckmäßigerweise bestehen die sich gegenüberliegenden Wandteile aus demselben Werkstoff, beispielsweise aus Stahl oder aus Leichtmetall, insbesondere aus Aluminium.

Weitere vorteilhafte Ausgestaltungen, Merkmale, Vorteile, Einzelheiten und Gesichtspunkte der Erfindung sind auch ihren Anpassungen an die erfindungsgemäßen Ausführungen aus den Ansprüchen und aus dem nachfolgenden, anhand der Zeichnungen abgehandelten Beschreibungsteil zu entnehmen.

Ein Ausführungsbeispiel und Varianten der Erfindung werden nachfolgend anhand der Figuren erläutert.

Es zeigen:
- Fig. 1: ein Schrägbild eines Gerüstausschnittes mit zwei Stielen, einem Horizontalriegel und zwei nebeneinander liegenden Laufplanken bzw. Gerüstböden;
- Fig. 2: ein Schrägbild eines Gerüstbodenabschnitts im Bereich eines der stirnseitigen Enden des Gerüstbodens gemäß Fig. 1;
- Fig. 3: ein Schrägbild des Querversteifungsprofils mit den an ihm seitlich befestigten Einhängehaken;
- Fig. 4: eine Teildraufsicht des Querversteifungsprofils im Bereich eines an ihm seitlich angebrachten Einhängehakens;
- Fig. 5: eine Seitenansicht mit Teilschnitt des Querversteifungsprofils mit Einhängehaken;
- Fig. 6: eine Teiloberansicht des Querversteifungsprofils mit Einhängehaken;
- Fig. 7: eine Teil-Draufsicht auf das stirnseitige Ende des Gerüstbodens ohne Darstellung der Querversteifungsprofile;
- Fig. 8: ein Teil-Schrägschnittbild im Bereich eines der stirnseitigen Enden des Gerüstbodens zur Verdeutlichung der Montage- und Anlageverhältnisse;
- Fig. 9: eine Teil-Unteransicht des Gerüstbodens im Bereich einer seiner stirnseitigen Ecken;
- Fig. 10: einen Teil-Längsschnitt parallel zur Längsachse des Gerüstbodens im Bereich eines seiner Stirnenden;
- Fig. 11: eine Teil-Oberansicht des Gerüstbodens im Bereich einer seiner Stirnenden;
- Fig. 12: ein Teil-Schrägschnittbild im Bereich eines der stirnseitigen Enden des Gerüstbodens zur Verdeutlichung der Lage- und Eingriffsverhältnisse der Schweißelektroden bzw. Stempel am Beispiel des Zusammenfügens des horizontalen unteren Querschenkels des Querversteifungsprofils mit der horizontalen Verbindungslasche des Längsholmes, mit gestrichelt markiertem Verbindungsbereich sowie zur Verdeutlichung der Gestaltung der Verbindungslasche sowie der Wanddickenverhältnisse;
- Fig. 13: ein Teil-Schrägschnittbild im Bereich eines der stirnseitigen Enden des Gerüstbodens zur Verdeutlichung der Lage- und Eingriffsverhältnisse der Schweißelektroden bzw. Stempel am Beispiel des Zusammenfügens des horizontalen oberen Querschenkels des Querversteifungsprofils mit der Lauffläche des Gerüstbodens, mit gestrichelt markiertem Verbindungsbereich;
- Fig. 14: einen stark vergrößerten Teilschnitt zweier aneinander liegender Blech-Wand-Teile in schematischer Darstellung im Bereich einer der Verbindungsbereiche, wie sie beispielsweise in Fig. 12 oder 13 durch die dort oval dargestellten, in Wirklichkeit jedoch entsprechend dem Flächenquerschnitt der Fügeelektroden bzw. Stempel kreisförmigen Fügezonen gekennzeichnet ist.

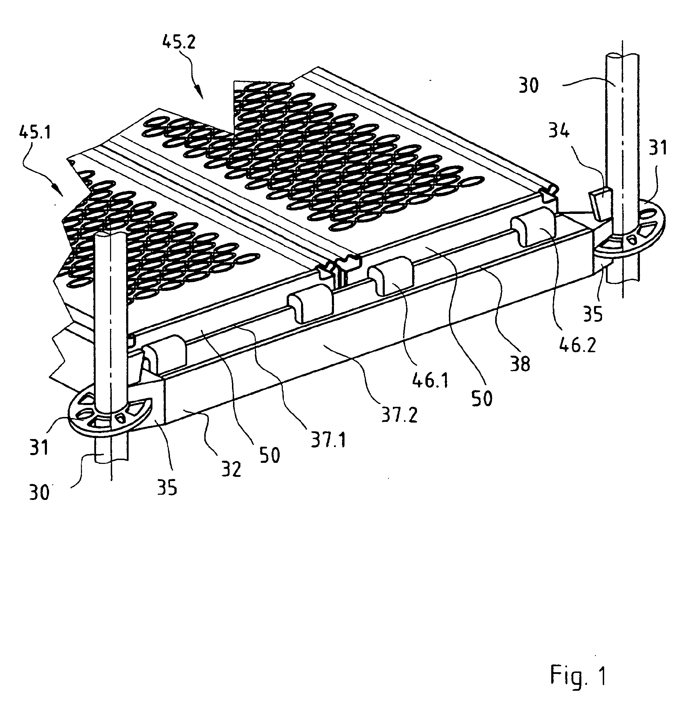

Fig. 1 zeigt einen kleinen Ausschnitt eines Gerüstes. Dabei sind an den Stielen 30 in einem dem Vertikalrastermaß des Gerüstsystems entsprechenden Abstand voneinander an sich bekannte Lochscheiben 31 angebracht. Zwischen den Stielen 30 ist an den Lochscheiben 31 ein Horizontalriegel 32 mit Hilfe von Keilköpfen 35 und diesen sowie die Lochscheibe 31 durchdringenden Keilen 34 befestigt. Der Horizontalriegel ist als ein nach oben offenes U-Profil mit den beiden seitlichen Vertikalschenkeln 37.1 und 37.2 ausgebildet. Deren obere Enden sind als Auflageränder 38 für die Einhängehaken 46.1 bzw. 46.2 gestaltet. Die Keilköpfe 35 sind in bekannter Weise mit Horizontalschlitzen gestaltet und auf die Lochscheiben 31 aufgesteckt und daran mit den Keilen 34 gesichert.

In dieser oder ähnlicher Art sind viele Gerüstetagen in einem Gerüst realisert. Anhand der Darstellung in Fig. 1 ist veranschaulicht, wie die Laufplanken mit ihren jeweiligen Gestaltungen als ein Teil des gesamten Gerüstes angeordnet sind. Anstelle eines Gerüstes mit Stielen und modulartigen Knotenanschlüssen können auch sogenannte Rahmengerüste vorgesehen sein.

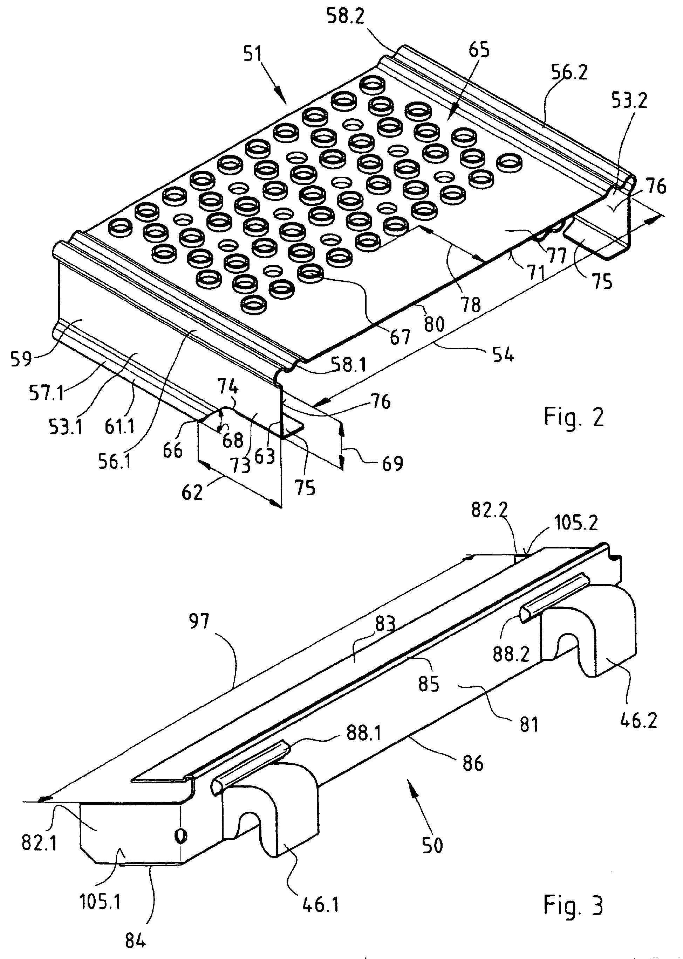

Aus den Fig. 2 und 3 geht die Gestaltung und relative Anordnung der wesentlichen, den Gerüstboden bzw. die Laufplanke 45 bildenden Teile hervor. Fig. 2 zeigt den hier einstückig im wesentlichen im Roll-Biege-Verfahren hergestellten Bodenprofilteil 51 aus Stahl-Blech. Dieser ist lateralseitig mit den profilartig gestalteten Längsholmen 53.1 und 53.2 und dem Laufflächenblech 65 ausgebildet. Das Laufflächenblech 65 weist eine Vielzahl von hier kreisförmigen Öffnungen 67 auf, die zum Teil mit nach oben aufgewulsteten Lochrändern und zum Teil mit nach unten aufgewulsteten Lochrändern gestaltet sind. Auf diese Weise wird nicht nur eine Strukturverstärkung bzw. Versteifung des horizontalen Laufflächenblechs 65 und damit der gesamten Laufplanke 45 erzielt, sondern eine rutschsichere Oberfläche einerseits sowie eine Möglichkeit zum Ablauf von fluiden Substanzen andererseits geschaffen. Die Öffnungen 67 sind gleichmäßig über das gesamte Laufflächenblech 65 angeordnet, wobei im Bereich der stirnseitigen Enden 63 des Bodenprofilteils 51 der horizontale, nicht mit Öffnungen versehene Laufflächenteil 77 vorgesehen ist, so daß die Öffnungen 67 vom stirnseitigen Ende 63 einen Abstand 78 aufweisen.

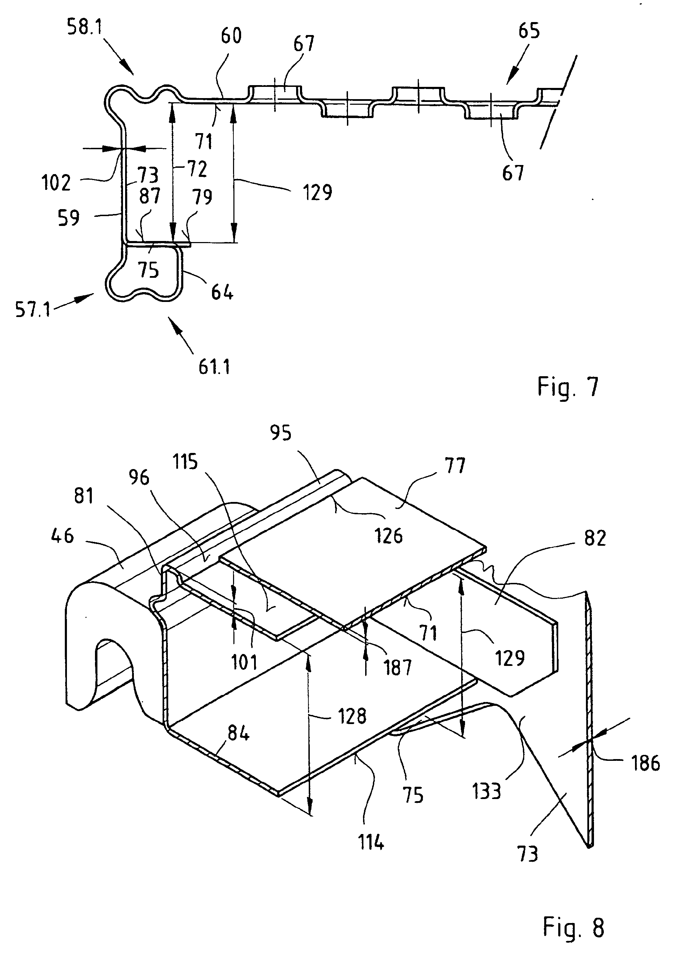

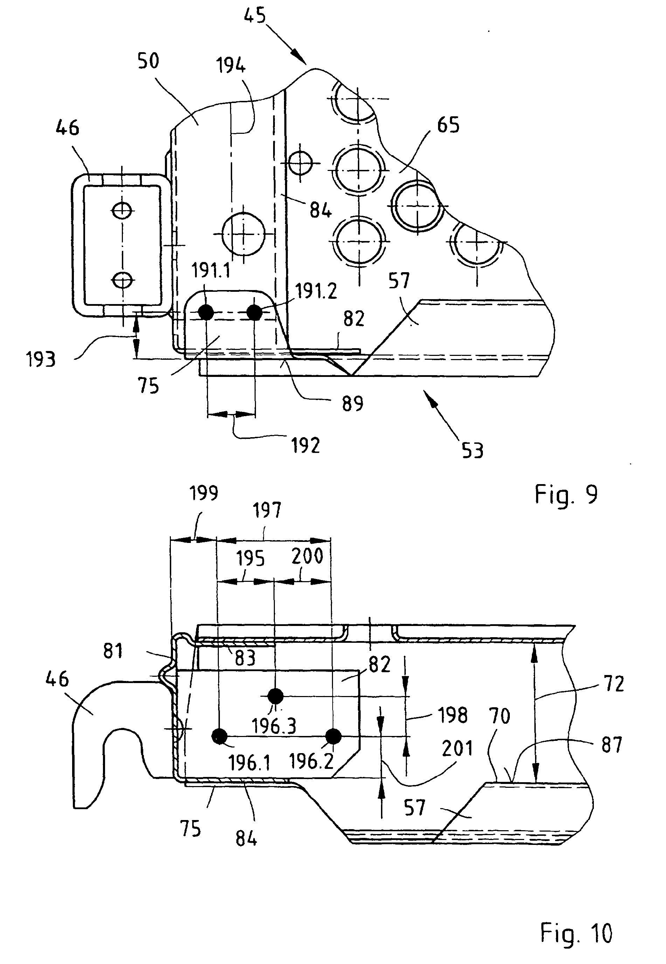

Die Längsholme 53.1 und 53.2 sind mit den vertikalen Wandteilen 59 und den sich nach oben sowie nach unten anschließenden, mehrfach gebogenen bzw. abgewinkelten, auch Stapelrippen 58.1, 58.2, 61.1, 61.2 bildenden, versteifenden, oberen Holmprofilen 56.1 und 56.2 sowie den unteren Holmprofilen 57.1 und 57.2 gestaltet und weisen die einheitliche Wanddicke 102 auf. Die oberen Holmprofile 56.1 bzw. 56.2 sind mit den im Stirnquerschnitt wellenförmig gestalteten Stapelrippen 58.1 bzw. 58.2 gebildet. Diese gehen jeweils in die horizontale Lauffläche 60 einerseits und in die vertikalen Wandteile 59 der Längsholme 53 über. An dem der Lauffläche 60 abgewandten unteren Ende der Längsholme 53 sind die unteren Holmprofile 57.1 bzw. 57.2 als Längsversteifungsprofile ausgebildet. Diese weisen die unteren Stapelrippen 61.1 bzw. 61.2 und den sich nach innen anschließenden Vertikal-Längs-Schenkel 64 auf, der im Abstand 72 von der Unterseite 71 des Laufflächenblechs 65 bzw. des Laufflächenteils 77 in den Horizontal-Längs-Schenkel 70 abgewinkelt ist (Fig. 7 und 10).

Während die oberen Holmprofile 56 mit ihren Stapelrippen 58 jweils bis an das stirnseitige Ende des Bodenprofilteils 51 reichen, enden die unteren Holmprofile 57 mit ihren Stapelrippen 61 im Abstand 62 vor dem stirnseitigen Ende 63 der Längsholme 53 bzw. des Bodenprofilteils 51.

Ausgehend von dem unteren Ende 66 des unteren Holmprofiles 57 ist der Längsholm 53 schräg nach oben in Richtung auf das stirnseitige Ende 63 des Bodenprofilteiles 51 bzw. des Längsholms 53 abgeschrägt gestaltet, und zwar in einem Winkel 68 von etwa 45°. Daran schließt sich der vertikale Wandteil 73 an, der durch die parallel zur Lauffläche 60 und in Längsrichtung ausgebildete Unterkante 74 begrenzt ist. Diese weist einen Abstand 69 unter der Unterseite 71 des Laufflächenblechs 65 bzw. des Laufflächenteils 77 auf.

An der Unterkante 74 des vertikalen Wandteiles 73 ist im Bereich des stirnseitigen Endes 63 die um 90° nach innen abgewinkelte, als Laschen-Schenkel-Teil ausgebildete, horizontale Verbindungslasche 75 vorgesehen.

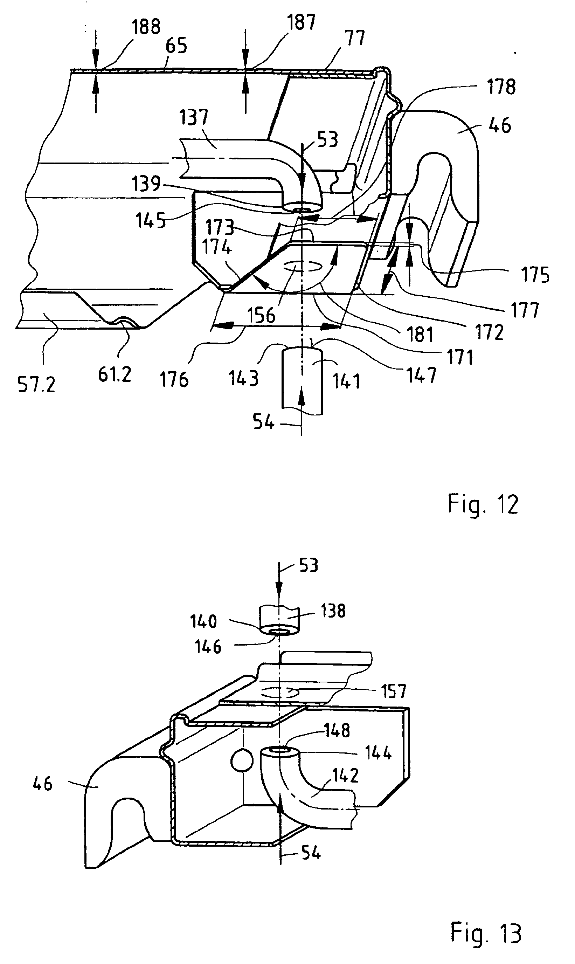

Wie aus Fig. 2 und insbesondere aus Fig. 9 und 12 ersichtlich, ist die Verbindungslasche 75 trapezförmig gestaltet. Anstelle der hier dargestellten und nachfolgend beschriebenen Trapezform kann jedoch abhängig von den jeweiligen Montage-, Füge- und Festigkeitsverhältnissen eine andere äußere Gestaltung der Verbindungslasche 75 vorgesehen sein.

Die mit Trapez-Basiskante 171 bezeichnete Grundlinie des Trapezes ist mit der Unterkante 74 des vertikalen Wandteils 73 des Längsholmes 53 gebildet. Die Trapez-Basiskante 171 ist länger als die übrigen Trapezseiten und weist eine Länge bzw. Breite 176 auf, die hier etwa der Tiefe 113 des Unterschenkels 84 des Querversteifungsprofils 50 entspricht. Senkrecht auf die Trapez-Basiskante 171 ist die parallel zur Stirnkante 126 des Laufflächenteils 77 verlaufende stirnseitige Vorderkante 172 ausgebildet. Diese weist eine Länge 177 auf, die hier etwa dem 0,5-fachen der Tiefe 113 des Unterschenkels 84 entspricht. Der Übergang zwischen der stirnseitigen Vorderkante 172 und der sich an diese anschließenden, parallel zur Trapez-Basiskante 171 verlaufenden und nach innen weisenden schmalen Basiskante 173 ist abgerundet gestaltet. Ihre Länge 178 ist hier geringfügig größer als die Länge 177 der stirnseitigen Vorderkante 172. An die schmale Basiskante 173 schließt sich die unter dem Winkel 181 von hier etwa 135° schräg nach außen verlaufende Innenkante bzw. Trapez-Schrägkante 174 an. Diese weist eine Länge 179 auf.

Die horizontale Verbindungslasche 75 weist von dem Laufflchenblech 65 bzw. dem Laufflächenteil 77 einen Abstand 129 auf, der dem Abstand 72 des Horizontal-Längs-Schenkels 70 des unteren Holmprofiles 57 entspricht, so daß die innere Oberfläche 79 der Verbindungslasche 75 und die innere Oberfläche 87 des Horizontal-Längs-Schenkels 70 etwa in einer Ebene liegen.

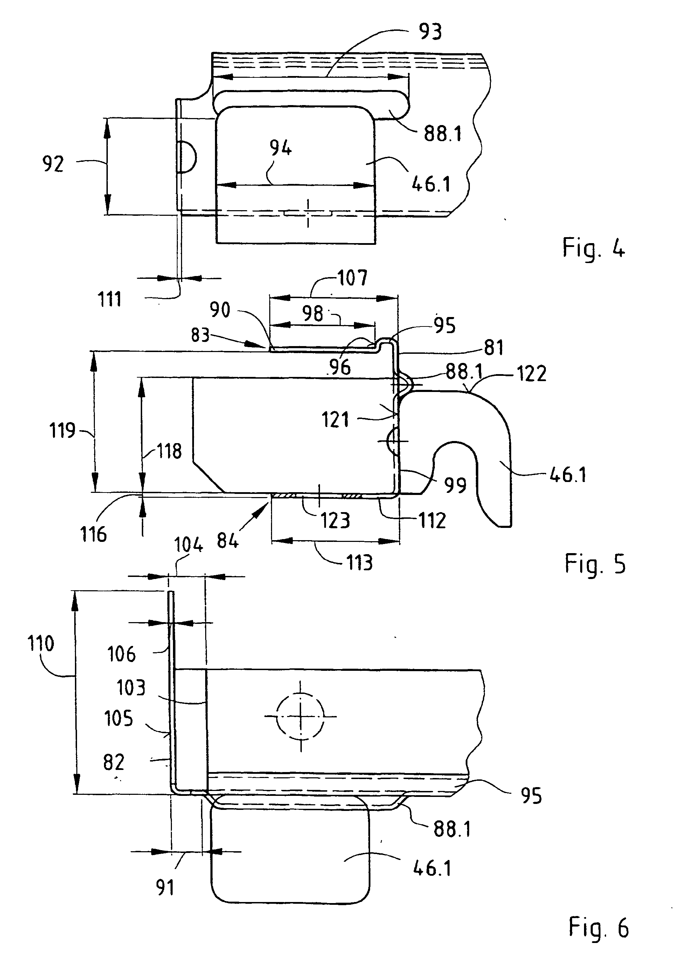

Fig. 3 zeigt eines der jeweils stirnseitig in das Bodenprofilteil 51 einsteckbaren Querversteifungsprofile 50, die als Stirnprofilteil bzw. Querverbindungskappe ausgebildet sind. Dieses ist mit der Vertikalaußenwand 81 und den jeweils durch Abkanten gebildeten Seitenschenkeln 82.1 und 82.2 sowie dem Oberschenkel 83 und dem Unterschenkel 84 gestaltet und weist folgende, insbesondere auch aus den Fig. 4 bis 6 hervorgehende Anschlußbedingungen auf, die auch zu der Einhänge-Haken-Gestaltung passend ausgebildet sind.

In der Vertikalaußenwand 81 des Querversteifungsprofils 50 sind zwei nach außen gewölbte Sicken 88.1 und 88.2 ausgebildet, die jeweils im Abstand 91 von den Seitenschenkeln 82.1 bzw. 82.2 sowie im Abstand 92 vom Unterschenkel 84 horizontal verlaufend angeordnet sind. Die Breite 93 der Sicken 88 ist etwas größer als die Breite 94 der Einhängehaken 46.

Der Oberschenkel 83 des Querversteifungsprofils 50 ist mit dem parallel zum Unterschenkel 84 verlaufenden Einschubteil 90 und im Übergangsbereich zur Vertikalaußenwand 81 hin mit der nach oben weisenden Anschlag- und Ausgleichsrippe 95 gebildet. Diese weist eine vertikale, parallel zur Vertikalaußenwand 81 verlaufende Anschlagfläche 96 auf. Die Eckübergänge zwischen der Vertikalaußenwand 81 und der vertikalen Anschlagfläche 96 sind abgerundet, während der Eckübergang zum horizontalen Einschubteil 90 des horizontalen Oberschenkels 83 abgekantet gestaltet ist. Das Einschubteil 90 weist die Tiefe 98 auf. Die jeweilige lateralseitige Außenkante 103 des Oberschenkels 83 weist einen Abstand 104 von der Außenfläche 105 des Seitenschenkels 82 auf, der größer ist als die Wandstärke 106 des Seitenschenkels 82 bzw. der übrigen, das Querversteifungsprofil 50 bildenden Teile.

Der Unterschenkel 84 des Querversteifungsprofils 50 verläuft überwiegend parallel zum Einschubteil 90 des Ober-schenkels 83 und ist senkrecht zur Vertikalaußenwand 81 ausgebildet. Der Abstand 111 der seitlichen Stirnkante 112 des Unterschenkels 84 von der Außenfläche 105 des jeweiligen Seitenschenkels 82.1 bzw. 82.2 entspricht der Wandstärke 106 des Querversteifungsprofils 50.

Der Oberschenkel 83 weist eine Tiefe 107 auf und der Unterschenkel 84 weist eine Tiefe 113 auf, die hier gleich groß sind.

Der Seitenschenkel 82.1 bzw. 82.2 ist normal zur Vertikalaußenwand 81 sowie normal zu dem horizontalen Unterschenkel 84 ausgebildet. Seine Tiefe 110 ist um etwa das 1,5- bis 1,8-fache größer als die Tiefe 107 des Unterschenkels 84 bzw. die Tiefe 113 des Oberschenkels 83. Der Abstand 116 seiner unterseitigen Stirnkante 117 von der nach außen weisenden Oberfläche 114 des Unterschenkels 84 entspricht etwa der Wandstärke 106 des Querversteifungsprofils 50. Seine Breite 118 ist kleiner als der lichte Abstand 119 zwischen dem Unterschenkel 84 und dem horizontalen Einschubteil 90 des Oberschenkels 83.

Im Einschubteil 90 des Unterschenkels 84 sind jeweils seitlich angeordnete kreisförmige Öffnungen 123 vorgesehen. Diese dienen zur Aufnahme von Einhängemitteln mittels derer die Querverbindungskappe 50 bzw. die gesamte Laufplanke 45 beim Durchlaufen des für die Oberflächenbehandlung der Stahlbleche notwendigen Verzinkungsbades aufgehängt werden kann.

Als Einhängehilfsmittel sind beiderends der Laufplanke 45 die Einhängehaken 46.1 und 46.2 vorgesehen. Diese sind beispielsweise unter Verwendung einer geeigneten Hilfsvorrichtung an der Vertikalaußenwand 81 des Querversteifungsprofils 50 angeschweißt. Die genaue Höhenposition der Einhängehaken 46.1 bzw. 46.2 wird dabei in der Weise festgelegt, daß diese jeweils mit ihrer rückseitigen Anlagefläche 121 unterhalb der Sicke 88.1 bzw. 88.2 an der Vertikalaußenwand 81 angelegt werden und soweit nach oben verschoben werden, bis sie mit ihrer oberen Begrenzungsfläche 124 an der Sicke 88.1 bzw. 88.2 anliegen.

Anstelle der in den Figuren gezeigten Einhängehaken 46, 46.1, 46.2, die ein leichtes und sicheres Einhängen, inbesondere in die, mit einem nach oben offenen U-Profil gestalteten Horizontaltragriegel 32 ermöglichen, können in Verbindung mit anderen Auflage- und/oder Einhängerandbedingungen auch anders gestaltete Einhängehilfsmittel vorgesehen sein.

Beispielsweise können zur Auflage auf Rundrohren passend gestaltete Einhängehaken vorgesehen sein, die ebenfalls an der Vertikalwand 81 des Querversteifungsprofils 50 angeschweißt sind. Zur Abhubsicherung können horizontal unter die Rundrohre schwenkbare Laschen vorgesehen sein. Diese können mittels geeigneter Verbindungsmittel vorzugswewise an dem Unterschenkel 84 des Querversteifungsprofils 50 angelenkt sein. Als Verbindungsmittel können beispielsweise durch Löcher des Unterschenkels 84 steckbare Nieten vorgesehen sein.

Alternativ oder kumulativ können auch Einhängehilfsmittel vorgesehen sein, welche ein Einhängen der Laufplanken in vertikal aufragende Stifte ermöglichen, die beispielsweise an Querriegeln oder Konsolen befestigt sind. Hierzu können die Querversteifungsprofile mit einer ausreichend über das stirnseitige Ende 63 des Laufflächenblechs 65 hinausragenden U-förmigen oder kastenprofilförmigen Profilgestaltung gebildet sein. Die Ober- und Unterschenkel dieser Profilgestaltung können beispielsweise mit fluchtenden Öffnungen versehen sein, deren Lochränder vorzugsweise nach innen ragen und abgerundet sind. Es können jedoch auch andere, geeignet erscheinende Lochrand-Konfigurationen vorgesehen sein, die ein sicheres und leichtes Aufstecken der Laufplanken auf die Vertikalstifte und eine leichte Demontage ermöglichen.

Bei der Montage wird das Querversteifungsprofil 50 in die Bodenprofilstruktur der Laufplanke 45 eingeschoben, bis die Anschlagfläche 96 an der Stirnkante 126 des Laufflächenteils 77 des Laufflächenblechs 65 der Gerüstbodenstruktur anschlägt (Fig. 8). Dabei untergreift der horizontale Einschubteil 90 des Oberschenkels 83 des Querversteifungsprofils 50 den Laufflächenteil 77 und der Unterschenkel 84 liegt auf der inneren Oberfläche 79 der Verbindungslasche 75 auf. Der Abstand 128 zwischen der nach außen weisenden Oberfläche 115 des horizontalen Einschubteils 90 des Oberschenkels 83 und der nach außen weisenden Oberfläche 114 des Unterschenkels 84 ist dabei gleich groß oder geringfügig kleiner als der Abstand 129 zwischen der nach innen weisenden Unterseite 71 des Laufflächenteils 77 des Laufflächenblechs 65 und der nach innen weisenden Oberfläche 79 der Verbindungslasche 75.

Die Seitenschenkel 82 liegen etwa über ihre gesamte Länge 110 an der glatten Innenwand 133 des vertikalen Wandteiles 73 des Längsholmes 53 an. Der Abstand 97 zwischen den Außenflächen 105.1 und 105.2 der beiden Seitenschenkel 82.1 und 82.2 ist dabei gleich groß oder geringfügig kleiner als der Abstand 54 zwischen den Innenflächen 76 der vertikalen Wandteile 73 der Längsholme 53.

Bedingt durch die vorgenannten Maßnahmen kann das Querversteifungsprofil 50 leicht in die Bodenprofilstruktur der Laufplanke eingesteckt werden, so daß ein steifer und verwindungsstabiler Rahmen ausgebildet wird.

In weiteren, nicht in den Figuren gezeigten Ausführungsvarianten können der Oberschenkel und/oder der Unterschenkel und/oder die Seitenschenkel des Querversteifungsprofils derart angeordnet sein, daß ihre Innenflächen auf den Außenflächen der übrigen, die Gerüstbodenprofilstruktur der Laufplanke 45 ausbildenden Wandteile auf- bzw. anliegen.

Die Befestigung des Querversteifungsprofils 50 an der Bodenprofilstruktur der Laufplanke 45 erfolgt an bestimmten Fügestellen mittels geeigneter Verbindungsstrukturen, die mittels eine lange Zeit sichere Verbindung ermöglichender, lokal einwirkender Fügeverfahren hergestellt werden.

Die genaue Lage und Anordnung der Fügestellen bzw. der die Verbindungsstrukturen enthaltenden Verbindungsbereiche ergibt sich am besten aus den Fig. 9 bis 11. In Fig. 9 ist die Verbindung des Unterschenkels 84 des Querversteifungsprofils 50 mit der Verbindungslasche 75 des Längsholmes 53 im Bereich einer der stirnseitigen Ecken der Laufplanke 45 gezeigt. Dabei sind die beiden Verbindungsstrukturen 191.1 und 191.2 vorgesehen, die in Längsrichtung hintereinander liegend und in dem Abstand 192 zueinander angeordnet sind. Die Verbindungsstrukturen 191.1 und 191.2 weisen von der Außenfläche 89 des vertikalen Wandteils 73 des Längsholmes 53 einen Abstand 193 auf, der etwa dem Abstand 192 entspricht. Die Verbindungsstrukturen 191.1 und 191.2 sind symmetrisch zur Querachse 194 des Unterschenkels 84 bzw. des Querversteifungsprofils 50 angeordnet.

In Fig. 10 ist die Lage und Anordnung der Fügestellen bzw. Verbindungsstrukturen 196.1, 196.2, 196.3 zur Verbindung des Seitenschenkels 82 des Querversteifungsprofiles 50 mit dem Längsholm 53 gezeigt. Diese sind dreieckförmig zueinander angeordnet. Dabei sind die beiden unteren Verbindungsstrukturen 196.1, 196.2 etwa parallel zur Längsachse der Laufplanke 45 ausgerichtet und weisen einen Abstand 197 voneinander auf. Dieser entspricht etwa der Tiefe 113 des Unterschenkels 84 des Querversteifungsprofils 50. Die Verbindungsstruktur 196.3 ist oberhalb der beiden Verbindungsstrukturen 196.1 und 196.2 in der Horizontal-Mitte zwischen diesen angeordnet, so daß die Verbindungsstruktur 196.3 zu der Verbindungsstruktur 196.1 und zu der Verbindungsstruktur 196.2 gleich große horizontale Abstände 195 bzw. 200 aufweist. Die Verbindungsstruktur 196.3 weist zu den beiden unteren Verbindungsstrukturen 196.1 und 196.2 einen vertikalen Abstand 198 auf. Dadurch bilden die drei Verbindungsstrukturen 196.1, 196.2, 196.3 ein gleichseitiges Dreieck aus.

Die stirnseitig angeordnete Verbindungsstruktur 196.1 weist von dem stirnseitigen Ende des Seitenschenkels 82 bzw. von der Vertikal-Außenwand 81 des Querversteifungsprofiles 50 einen Abstand 199 auf, der dem Abstand 198 der Verbindungsstruktur 196.3 von den beiden unteren Verbindungsstrukturen 196.1 und 196.2 entspricht. Letztere weisen von der unteren Stirnkante 117 des Seitenschenkels 82 bzw. von dem Unterschenkel 84 des Querversteifungsprofiles 50 einen Abstand 201 auf, der dem Abstand 199 der stirnseitigen Verbindungsstruktur 196.1 von dem stirnseitigen Ende des Seitenschenkels 82 bzw. von der Vertikal-Außenwand 81 des Querversteifungsprofiles 50 etwa entspricht.

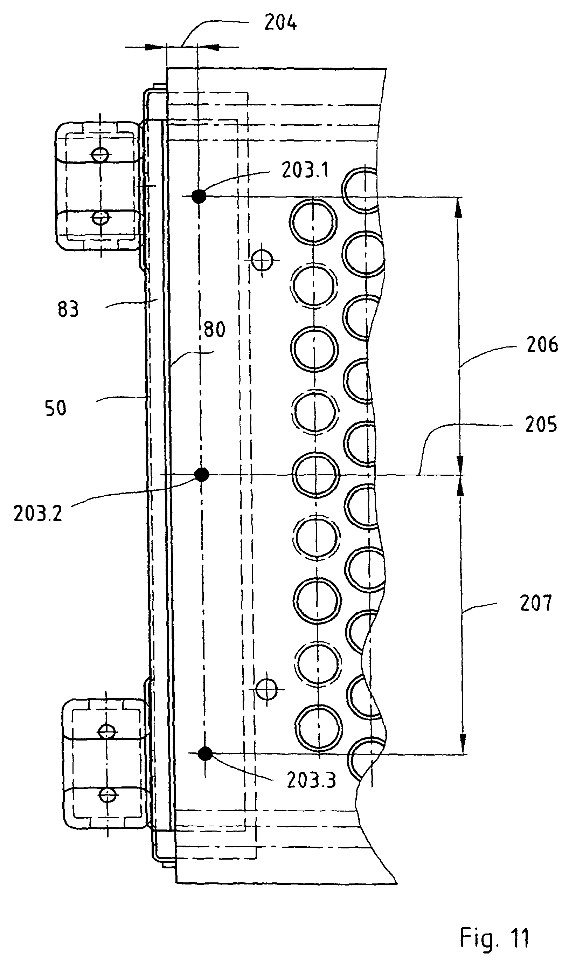

In Fig. 11 ist die Verbindung des Oberschenkels 83 des Querversteifungsprofiles 50 mit dem Laufflächenteil 77 des Laufflächenbleches 65 gezeigt. Hierfür sind drei parallel zur Stirnkante 126 des Laufflächenteiles 77 und in einer Reihe angeordnete Verbindungsstrukturen 203.1, 203.2, 203.3 angebracht. Diese weisen von der Stirnkante 117 des Laufflächenblechs 65 einen Abstand 204 auf, der etwa dem 6- bis 9-fachen der Wandstärke 187 des Laufflächenteiles 77 bzw. des Laufflächenbleches 65 im Verbindungsbereich entspricht. Die Fügestellen bzw. Verbindungsstrukturen 203.1, 203.2, 203.3 sind symmetrisch zur Mitten-Längsachse 205 der Laufplanke 45 angeordnet, und weisen zueinander die gleich großen Abstände 206 bzw. 207 auf.

Die Anzahl, Lage und Anordnung der vorstehend bezeichneten Fügestellen bzw. Verbindungsstrukturen 191.1, 191.2, 196.1, 196.2, 196.3, 203.1, 203.2, 203.3 ist auch unter Berücksichtigung der sich aus den seitherigen Herstellungsgegebenheiten ergebenden Randbedingungen, insbesondere unter Beibehalt einer im wesentlichen gleichbleibenden äußeren Gestalt des Querversteifungsprofils sowie unter Berücksichtigung des seitherigen, auf die Gerüst-Rastermaße abgestimmten Baukastensystems und insbesondere der in den für die Steifigkeit und Rahmenausbildung der gesamten Laufplanke wichtigen Stirn- und Eckbereichen auftretenden statischen und dynamischen Beanspruchungen und der dort auftretenden Spannungen und Werkstoffbeanspruchungen sowie der Schaffung günstiger Möglichkeiten einer vollautomatischen Fertigung auch im Hinblick auf eine gute Fügewerkzeug-Zugänglichkeit der zu verbindenden Wandteile gewählt.

Die Verbindung der gegenüberliegenden Wandteile erfolgt vorzugsweise mittels elektrischem Widerstandsschweißen bzw. Punktschweißen. Als Fügewerkzeuge werden dabei Schweißelektroden eingesetzt, deren geometrische Gestaltung und Formgebung auf die jeweiligen Verbindungsverhältnisse und Zugänglichkeitsverhältnisse abgestimmt gestaltet sind.

Eine derartige Fügesituation unter Verwendung von Punkt-Schweißelektroden ist beispielhaft in den Fig. 12 und 13 dargestellt. Dabei sind im Querschnitt kreisförmige Oberelektroden 137 bzw. 138 und Unterelektroden 141 bzw. 142 verwendet. An ihren jeweiligen, den zu verbindenden Blechteilen gegenüberliegenden Enden 139 und 143 bzw. 140 und 144 weisen die Oberelektrode 137 bzw. 138 und die jeweilige Unterelektrode 141 bzw. 142 zueinander parallele kreisflächenförmige Berühr- bzw. Stoßflächen 145, 146, 147, 148 auf.

Jeweils abhängig von dem gewählten Fügeverfahren sind ggf. unterschiedliche Wandstärken der zu fügenden Blechteile zu wählen. Dementsprechend sind die Wanddickenverhältnisse des Bodenprofilteils 51 mit der Verbindungslasche 75 (Wandstärke 175), den vertikalen Wandteilen 73 (Wandstärke 186) und dem Laufflächenteil 77 (Wandstärke 187) einerseits und des Querversteifungsprofils 50 (Wandstärke 106) mit dem Oberschenkel 83, dem Unterschenkel 84 und den Seitenschenkeln 82 andererseits, insbesondere an den vorherbestimmten Fügestellen auf das jeweilige Fügeverfahren entsprechend abgestimmt gestaltet. Im vorliegenden Ausführungsbeispiel sind die Wandstärken 175, 186, 187 und 106 gleich groß gewählt. Dadurch ist eine optimale Fertigungsqualität bei hohem Automatisierungsgrad ermöglicht.

Zum Verschweißen der jeweils zu verbindenden Blech- bzw. Profilteile werden beispielsweise die Oberelektrode 137 bzw. 138 und die Unterelektrode 141 bzw. 142 in Richtung der Pfeile 153 und 154 aufeinander zu bewegt, bis die sich jeweils gegenüberliegenden Berühr- bzw. Stoßflächen 145 und 147 bzw. 146 und 148 der Ober- bzw. Unterelektroden 137, 183, 141, 143 an den zu verbindenden Wandteilen anliegen. Alternativ zu dieser Verfahrensweise kann auch eine der Elektroden in Richtung der Pfeile 153 bzw. 154 bewegt werden, während die jeweils gegenüberliegende zweite Elektrode ortsfest gehalten wird. Anschließend wird die Widerstandspunktschweißung in bekannter Weise durch Einleiten von elektrischem Strom vollzogen. Bei der Herstellung der mittels elektrischem Widerstandsschweißen bzw. Punktschweißen verbundenen Wandteile ist es gegenüber anderen Fügeverfahren vorteilhaft, daß an die Positioniergenauigkeit der Fügewerkzeuge, d.h. der Fügeelektroden nur relativ geringe Anforderungen gestellt werden.

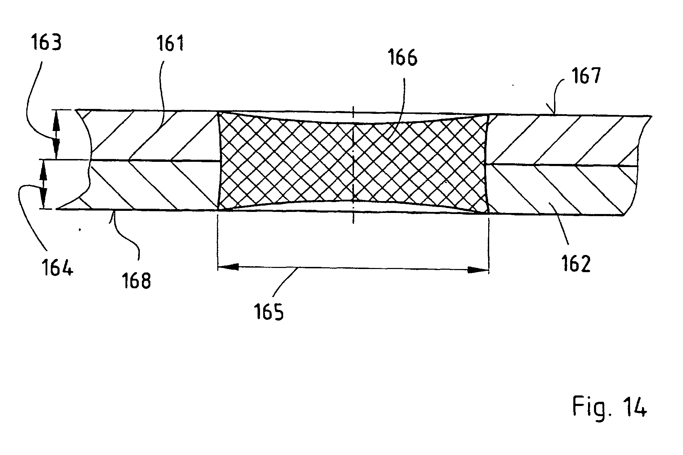

Nach dem Verbinden zweier oder auch mehrerer Blech- bzw. Profilteile erhält man in den beispielhaft in Fig. 12 bzw. Fig. 13 gestrichelt dargestellten lokalen Verbindungsbereichen 156 bzw. 157 die in Fig. 14 schematisch dargestellte Verbindung. Dabei sind die aufeinanderliegenden Wandteile 161 und 162, die hier eine gleiche Dicke 163 und 164 aufweisen, in dem der Kontaktgeometrie der beiden Elektroden bzw. Stempel entsprechenden Verbindungsbereich 165 miteinander unlösbar stoffschlüssig verbunden. Die sich dabei ausbildende Verbindungsstruktur 166 ist folglich ausschließlich mit den gegenüberliegenden Wandteilen 161, 162 gebildet, so daß keine zusätzlichen Verbindungsmittel und Hilfsstoffe erforderlich sind. Die Verbindung der gegenüberliegenden Wandteile 161, 162 und die Ausbildung der Verbindungsstruktur 166 erfolgt also unmittelbar mit elektrisch induziertem Heiß-Werkstoff-Fließen der Wandteile 161, 162. Alternativ bzw. unterstützend können über die Fügewerkzeuge bzw. Schweißelektroden auch Druckkräfte auf die zu verbindenden Wandteile 161, 162 ausgeübt werden, so daß die Verbindungsmittel auch mit unmittelbar durch Druckkräfte induziertem Kalt-Werkstoff-Fließen zumindest einer der Wandteile 161, 162 gebildeten Verbindungsstrukturen ausgebildet sein können.

Die mit Hilfe des elektrischen Punktschweiß- bzw. Widerstand-Schweiß-Verfahrens hergestellten stoffschlüssigen Verbindungsstrukturen ermöglichen eine Verbindung zwischen dem Querversteifungsprofil und der übrigen Gerüstboden-Profilstruktur, welche ohne Vorlochen der zu verbindenden Wandteile und ohne Zugabe von Hilfs- oder Zusatzstoffen möglich ist und sehr hohe statische und dynamische Festigkeitswerte auch über lange Zeit aufweist. Die miteinander verbundenen Wandteile weisen nach dem Verbinden keine störenden Schnittkanten auf.

Weitere vorteilhafte Gesichtspunkte und Merkmale der Erfindung sind auch alleine oder in Kombination mit den nachstehenden Maßnahmen gegeben.

Beispielsweise kann alternativ vorgesehen sein, daß der Unterschenkel 84 des Querversteifungsprofils 50 die Verbindungslasche 75 untergreift.

Ferner kann vorgesehen sein, daß der Unterschenkel 84 und/oder der Oberschenkel 83 des Querversteifungsprofils 50 sich etwa über die ganze Breite der Laufplanke 45, 45.1, 45.2 erstrecken.

Zweckmäßigerweise ist das Querversteifungsprofil 50 mit einem C- bzw. U-förmigen Querschnittsprofil ausgebildet. Dieses kann jedoch auch abhängig von der gewünschten Belastbarkeit und der jeweiligen Abmaße mit einem querschnittlich geschlossenen Kastenprofil ausgebildet sein. Dabei kann vorgesehen sein, daß das Kastenprofil den Längsholmen 53, 53.1, 53.2 bzw. dem Laufflächenblech 65 vorgesetzt ist und/oder daß dieses zwischen die Längsholme 53, 53.1, 53.2 eingesteckt ist. Vorteilhafterweise erstreckt sich das Kastenprofil etwa über die ganze Breite der Laufplanke.

Zweckmäßigerweise weist das Querversteifungsprofil 50 eine sich nach oben erstreckende Anschlag- und Ausgleichsrippe 95 auf. Dadurch läßt sich ein verletzungssicherer Ausgleich von lokalen Unebenheiten des Laufflächenblechs 65 und eine zusätzliche Verstärkung des Querversteifungsprofiles 50 schaffen. Dabei kann es zweckmäßig sein, daß die Anschlag- und Ausgleichsrippe 95 eine Höhe 101 aufweist, die größer ist als die stirnseitige Wandstärke 187 des Laufflächenbleches 65.

Eine besonders stabile Verbindung läßt sich dadurch erreichen, daß die Wandteile form- und kraftschlüssig verbunden sind.

Ferner ist es von Vorteil, wenn das Querversteifungsprofil 50, das Laufflächenblech 65 und die Längsholme 53, 53.1, 53.2 eine Wandstärke 106, 187, 102 aufweisen, die einheitlich und gleich groß ist. Dies ermöglicht eine kostengünstige automatische Herstellung unter Anwendung weitgehend gleicher Fügeparameter und eine berechenbare, gleichbleibend gute Qualität der Verbindung.

Nachfolgend wird ein wichtiger Teil der Beschreibung wiedergegeben:
Die Erfindung betrifft eine Laufplanke (45) aus Metall für Gerüste, Konsolen, Podien und dgl., die ein Laufflächenblech (65) sowie wenigstens zwei mit diesem fest verbundene Längsholme (53) trägerartigen Querschnitts aufweist. Diese sind mit einem unter dem Laufflächenblech (65) angeordneten Längsversteifungsprofil ausgebildet. Im Bereich der Stirnseiten der Laufplanke (45) sind U-förmig bzw. kastenförmig profilierte, Oberschenkel, Unterschenkel (84) und/oder Seitenschenkel (82) aufweisende Querversteifungsprofile (50) vorgesehen. Der Oberschenkel ist mit dem Laufflächenblech (65), der Unterschenkel (84) und/oder die Seitenschenkel (82) sind mit den Längsholmen (53) in jeweils lokal, mit überlappenden wandteilen ausgebildeten Verbindungsbereichen fest verbunden, wobei wenigstens einer der sich gegenüberliegenden Wandteile vor dem Verbinden im Verbindungsbereich vorlochungs- und/oder vortrennfrei ausgebildet ist. Die Verbindungsmittel sind unmittelbar mit elektrisch und/oder durch Druckkräfte induziertem Heiß- bzw. Kalt-Werkstoff-Fließen zumindest einer der Wandteile gebildeten Verbindungsstrukturen (191.1, 191.2) vollautomatisch herstellbar ausgebildet. Die Längsholme (53) sind unterhalb des Laufflächenbleches vorzugsweise mit dem Unterschenkel (84) des Querversteifungsprofils (50) mit einer sich quer erstreckenden Verbindungslasche (75) mit wenigstens einem der die Verbindungsstrukturen (191.1, 191.2) aufweisenden Verbindungsmittel fest verbunden.

## Patentansprüche

1. Laufplanke aus Metall für Gerüste, Konsolen, Podien und dgl. mit folgenden Merkmalen:
- die Laufplanke (45, 45.1, 45.2) weist ein Laufflächenblech (65) sowie wenigstens zwei mit diesem fest verbundene Längsholme (53, 53.1, 53.2) trägerartigen Querschnitts auf;
- die Längsholme (53, 53.1, 53.2) sind mit einem unter dem Laufflächenblech (65) angeordneten Längsversteifungsprofil ausgebildet;
- die Laufplanke weist Einhängehilfsmittel auf;
- im Bereich der Stirnseiten der Laufplanke (45, 45.1, 45.2) sind Querversteifungsprofile (50) vorgesehen;
- die Querversteifungsprofile (50) haben Oberschenkel (83), Unterschenkel (84) und/oder Seitenschenkel (82, 82.1, 82.2);
- die Querversteifungsprofile (50) weisen mit den Längsholmen (53, 53.1, 53.2) und dem Laufflächenblech (65) sich unter Ausbildung von Überlappungsbereichen gegenüberliegende Wandteile auf;
- der Oberschenkel (83) ist mit dem Laufflächenblech (65) und
- der Unterschenkel (84) und/oder die Seitenschenkel (82, 82.1, 82.2) sind mit den Längsholmen (53, 53.1, 53.2) in den Überlappungsbereichen enthaltenen Verbindungsbereichen (156, 157, 165) mittels eine Verbindung dieser Wandteile ermöglichenden Fügewerkzeugen durch Verbindungsmittel fest verbunden;
- die Verbindungsbereiche sind jeweils lokal begrenzt ausgebildet;
**dadurch gekennzeichnet, daß**
- wenigstens einer der sich gegenüberliegenden Wandteile vor dem Verbinden im Verbindungsbereich vorlochungs- und/oder vortrennfrei ausgebildet ist, wobei
- die Verbindungsmittel zur Verbindung der Querversteifungsprofile (50) mit den Längsholmen (53, 53.1, 53.2) und/oder dem Laufflächenblech (65) unmittelbar mit elektrisch und/oder durch Druckkräfte induziertem Heiß- bzw. Kalt-Werkstoff-Fließen zumindest einer der Wandteile gebildeten, vollautomatisiert herstellbaren Verbindungsstrukturen (166; 191.1, 191.2; 196.1, 196.2, 196.3; 203.1, 203.2, 203.3) ausgebildet sind und wobei;
- die Überlappungsbereiche und benachbarte Wandteile hinsichtlich der Zügänglichkeit der Fügewerkzeuge eine automatische Fertigung ermöglichende Gestaltung und Anordnung aufweisen und wobei
- die Längsholme (53, 53.1, 53.2) an ihrem stirnseitigen Ende (63) eine sich unterhalb des Laufflächenbleches (65) in Querrichtung erstreckende, mit den Längsholmen (53, 53.1, 53.2) einteilig gebildete und von dem Längsversteifungsprofil räumlich getrennte Verbindungslasche (75) aufweisen,
- die mit dem Unterschenkel (84) des Querversteifungsprofils (50) mit wenigstens einem der die Verbindungsstrukturen (166, 191.1, 191.2) aufweisenden Verbindungsmittel fest verbunden ist.

2. Laufplanke aus Metall nach einem der übrigen Ansprüche,
**dadurch gekennzeichnet,**
**daß** der Oberschenkel (83) mit dem Laufflächenblech (65) und die Seitenschenkel (82, 82.1, 82.2) mit den Längsholmen (53, 53.1, 53.2) jeweils mit wenigstens einem der die Verbindungsstrukturen aufweisenden Verbindungsmittel fest verbunden sind.

3. Laufplanke aus Metall nach einem der übrigen Ansprüche,
**dadurch gekennzeichnet,**
**daß** die Verbindungslasche (75) und der Unterschenkel (84) eine aufeinander abgestimmte Fügefläche aufweisen, die das gleichzeitige oder sequentiell beabstandete Anbringen von wenigstens zwei der Verbindungsstrukturen ermöglicht.

4. Laufplanke aus Metall nach einem der übrigen Ansprüche,
**dadurch gekennzeichnet,**
**daß** alle sich jeweils gegenüberliegenden Wandteile Fügeflächen aufweisen, die so aufeinander abgestimmt gestaltet sind, daß sie das gleichzeitige oder sequentiell beabstandete Anbringen von wenigstens zwei der Verbindungsstrukturen ermöglichen.

5. Laufplanke aus Metall nach einem der übrigen Ansprüche,
**dadurch gekennzeichnet,**
**daß** die Fügeflächen der sich gegenüberliegenden Wandteile in den jeweiligen Verbindungsbereichen vor dem Verbinden im wesentlichen parallel und eben gestaltet sind.

6. Laufplanke aus Metall nach einem der übrigen Ansprüche,
**dadurch gekennzeichnet,**
**daß** die stirnseitige Vorderkante (172) der Verbindungslasche (75) im Bereich des stirnseitigen Endes des Unterschenkels (84) ausgebildet ist.

7. Laufplanke aus Metall nach einem der übrigen Ansprüche,
**dadurch gekennzeichnet,**
**daß** die Verbindungsstrukturen im wesentlichen im Bereich der stirnseitigen Enden (63) der Längsholme (53, 53.1, 53.2) vorgesehen sind.

8. Laufplanke aus Metall nach einem der übrigen Ansprüche,
**dadurch gekennzeichnet,**
**daß** die Verbindungslasche (75) eine Breite (176) bzw. Tiefe aufweist, die der Tiefe (113) bzw. Breite des Unterschenkels (84) etwa entspricht.

9. Laufplanke aus Metall nach einem der übrigen Ansprüche,
**dadurch gekennzeichnet,**
**daß** die Verbindungslasche (75) trapezförmig gestaltet ist.

10. Laufplanke aus Metall nach Anspruch 9,
**dadurch gekennzeichnet,**
**daß** die Verbindungslasche (75) mit einer im Übergangsbereich zu den benachbarten Wandteilen des Längsholmes (53, 53.1, 53.2) angeordneten Trapez-Basiskante (171) gestaltet ist, deren Breite (176) etwa der Tiefe (113) des Unterschenkels (84) des Querversteifungsprofils (50) entspricht.

11. Laufplanke aus Metall nach wenigstens einem der Ansprüche 9 oder 10,
**dadurch gekennzeichnet,**
**daß** die Verbindungslasche (75) mit einer schräg nach vorn ausgebildeten Trapez-Schrägkante (174) gestaltet ist.

12. Laufplanke aus Metall nach wenigstens einem der Ansprüche 9 bis 11,
**dadurch gekennzeichnet,**
**daß** die Übergänge der Trapezkanten (171, 172, 173, 174) gerundet gestaltet sind.

13. Laufplanke aus Metall nach einem der übrigen Ansprüche,
**dadurch gekennzeichnet,**
**daß** der Übergangsbereich der Verbindungslasche (75) zu den anschließenden Wandteilen des Längsholmes (53, 53.1, 53.2) gerundet gestaltet ist.

14. Laufplanke aus Metall nach einem der übrigen Ansprüche,
**dadurch gekennzeichnet,**
**daß** die Verbindungslasche (75) den Unterschenkel (84) des Querversteifungsprofils (50) untergreift.

15. Laufplanke aus Metall nach einem der übrigen Ansprüche,
**dadurch gekennzeichnet,**
**daß** das Querversteifungsprofil (50) mit wenigstens zwei in Richtung der Längsachse der Laufplanke (45, 45.1, 45.2) beabstandeten, die Verbindungsstrukturen (191.1, 191.2) aufweisenden Verbindungsmitteln mit der Verbindungslasche (75) verbunden sind.

16. Laufplanke aus Metall nach Ansprch 15,
**dadurch gekennzeichnet,**
**daß** die benachbarten Verbindungsstrukturen (191.1, 191.2) einen Abstand (192) zueinander aufweisen, der dem 10 bis 15-fachen der Wandstärke (175) der Verbindungslasche (75) und/oder der Wandstärke (106) des Querversteifungsprofils (50) im Überlappungsbereich entspricht.

17. Laufplanke aus Metall nach Anspruch 15,
**dadurch gekennzeichnet,**
**daß** die benachbarten Verbindungsstrukturen (191.1, 191.2) einen Abstand (192) zueinander aufweisen, der etwa dem 0,4 bis 0,5-fachen der Tiefe (113) des Unterschenkels (84) des Querversteifungsprofils (50) entspricht.

18. Laufplanke aus Metall nach einem der übrigen Ansprüche,
**dadurch gekennzeichnet,**
**daß** die Verbindungsstrukturen (191.1, 191.2) symmetrisch zur Querachse (194) des Querversteifungsprofils (50) angeordnet sind.

19. Laufplanke aus Metall nach einem der übrigen Ansprüche,
**dadurch gekennzeichnet,**
**daß** die Verbindungsstrukturen (191.1, 191.2) von den vertikalen Außenflächen (89) der Längsholme (53, 53.1, 53.2) einen Abstand (193) aufweisen, der etwa dem Abstand (192) zwischen den benachbarten Verbindungsstrukturen entspricht.

20. Laufplanke aus Metall nach einem der übrigen Ansprüche,
**dadurch gekennzeichnet,**
**daß** die Seitenschenkel (82) rechteckförmig gestaltet sind.

21. Laufplanke aus Metall nach einem der übrigen Ansprüche,
**dadurch gekennzeichnet,**
**daß** die Seitenschenkel (82) mit drei dreieckförmig zueinander angeordneten Verbindungsstrukturen (196.1, 196.2, 196.3) mit den Längsholmen (53, 53.1, 53.2) verbunden sind.

22. Laufplanke aus Metall nach Anspruch 21,
**dadurch gekennzeichnet,**
**daß** zwei Verbindungsstrukturen (196.1, 196.2) der drei Verbindungsstrukturen (196.1, 196.2, 196.3) etwa parallel zur Längsachse der Laufplanke (45) ausgerichtet und unterhalb der dritten Verbindungsstruktur (196.3) angeordnet sind.

23. Laufplanke aus Metall nach Anspruch 22,
**dadurch gekennzeichnet,**
**daß** die beiden unteren Verbindungsstrukturen (196.1, 196.2) einen Abstand (197) zueinander aufweisen, der etwa der Tiefe (113) der Unterschenkel (84) des Querversteifungsprofils (50) entspricht.

24. Laufplanke aus Metall nach wenigstens einem der Ansprüche 22 oder 23,
**dadurch gekennzeichnet,**
**daß** die stirnseitig angeordneten Verbindungsstrukturen (196.1) von dem stirnseitigen Ende (99) des Seitenschenkels (82, 82.1, 82.2) bzw. von der Vertikalaußenwand (81) einen Abstand (199) aufweisen, der etwa dem Abstand (198) der dritten Verbindungsstruktur (196.3) von den unteren Verbindungsstrukturen (196.1, 196.2) entspricht.

25. Laufplanke aus Metall nach wenigstens einem der Ansprüche 21 bis 24,
**dadurch gekennzeichnet,**
**daß** die drei Verbindungsstrukturen (196.1, 196.2, 196.3) derart angeordnet sind, daß ein gleichseitiges Dreieck gebildet ist.

26. Laufplanke aus Metall nach wenigstens einem der Ansprüche 22 bis 25,
**dadurch gekennzeichnet,**
**daß** die unteren Verbindungsstrukturen (196.1, 196.2) von der unteren Stirnkante (117) der Seitenschenkel (82, 82.1, 82.2) bzw. von dem Unterschenkel (84) des Querversteifungsprofils (50) einen Abstand (201) aufweisen, der dem Abstand (199) der stirnseitigen Verbindungsstruktur (196.1) von dem stirnseitigen Ende (99) der Seitenschenkel (82, 82.1, 82.2) etwa entspricht.

27. Laufplanke aus Metall nach einem der übrigen Ansprüche,
**dadurch gekennzeichnet,**
**daß** die Querschenkel (83) rechteckförmig gestaltet sind.

28. Laufplanke aus Metall nach einem der übrigen Ansprüche,
**dadurch gekennzeichnet,**
**daß** der Oberschenkel (83) mit drei parallel zur Stirnkante (80) des Laufflächenblechs (65) und in einer Reihe angeordneten Verbindungsstrukturen (203.1, 203.2, 203.3) mit dem Laufflächenblech (65) verbunden ist.

29. Laufplanke aus Metall nach einem der übrigen Ansprüche,
**dadurch gekennzeichnet,**
**daß** die Verbindungsstrukturen (203.1, 203.2, 203.3) von der Stirnkante (80) des Laufflächenblechs (65) einen Abstand (204) aufweisen, der etwa dem 6- bis 9-fachen der Wandstärke (187) des Laufflächenblechs (65) im Verbindungsbereich entspricht.

30. Laufplanke aus Metall nach einem der übrigen Ansprüche,
**dadurch gekennzeichnet,**
**daß** die Verbindungsmittel zur Verbindung der Querversteifungsprofile (50) mit den Längsholmen (53, 53.1, 53.2) und/oder dem Laufflächenblech (65) unmittelbar mit elektrisch und/oder durch Druckkräfte induziertem Heiß- bzw. Kalt-Werkstoff-Fließen jedes der Wandteile gebildeten, vollautomatisiert herstellbaren Verbindungsstrukturen (166; 191.1, 191.2; 196.1, 196.2, 196.3; 203.1, 203.2, 203.3) ausgebildet ist.

31. Laufplanke aus Metall nach einem der übrigen Ansprüche,
**dadurch gekennzeichnet,**
**daß** die Verbindungsstrukturen (166; 191.1, 191.2; 196.1, 196.2, 196.3; 203.1, 203.2, 203.3) ausschließlich mit den sich gegenüberliegenden Wandteilen (161, 162) ausgebildet sind.

32. Laufplanke aus Metall nach einem der übrigen Ansprüche,
**dadurch gekennzeichnet,**
**daß** die Verbindungsstrukturen (166; 191.1, 191.2; 196.1, 196.2, 196.3; 203.1, 203.2, 203.3) nicht über die freien Oberflächen (167, 168) der miteinander verbundenen Wandteile (161, 162) hervorstehen.

33. Laufplanke aus Metall nach einem der übrigen Ansprüche,
**dadurch gekennzeichnet,**
**daß** die sich gegenüberliegenden Wandteile (161, 162) jeweils aus Stahl oder Leichtmetall, insbesondere aus Aluminium bestehen.

## Claims

1. Gangboard of metal for scaffolds, brackets, platforms and the like, with the following features:
- the gangboard (45, 45.1, 45.2) comprises a tread surface plate (65) as well as at least two longitudinal beams (53, 53.1), which are fixedly connected therewith, of girder-like cross-section;
- the longitudinal beams (53, 53.1, 53.2) are constructed with a longitudinal reinforcing profile arranged under the tread surface plate (65);
- the gangboard has suspension aids;
- transverse reinforcing profiles (50) are provided in the region of the end faces of the gangboard (45, 45.1, 45.2);
- the transverse reinforcing profiles (50) have upper limb (83), lower limb (84) and/or side limbs (82, 82.1, 82.2);
- the transverse reinforcing profiles (50) have, together with the longitudinal beams (53, 53.1, 53.2) and the tread surface plate (65), wall parts which are opposite one another with formation of overlapping regions;
- the upper limb (83) is fixedly connected with the tread surface plate (65) and
- the lower limb (84) and/or the side limbs (82, 82.1, 82.2) is or are fixedly connected with the longitudinal beams (53, 53.1, 53.2) in connecting regions (156, 157, 165), which contain the overlapping regions, by means of joining tools which enable connection of these wall parts, by connecting means;
- the connecting regions are each constructed to be locally limited;
**characterised in that**
- at least one of the mutually opposite wall parts is constructed, prior to the connecting in the connecting region, to be free of pre-punching and/or pre-separation, wherein
- the connecting means for connecting the transverse reinforcing profiles (50) with the longitudinal beams (53, 53.1, 53.2) and/or the tread surface plate (65) are constructed directly with connecting structures (166; 191.1, 191.2; 196.1, 196.2, 196.3; 203.1, 203.2, 203.3) which are producible fully automatically and formed by hot-material or cold-material flow, which is induced electrically and/or by pressure forces, of at least one of the wall parts and wherein;
- the overlapping regions and adjacent wall parts have with respect to accessibility of the joining tools a design and arrangement enabling automatic production and wherein
- the longitudinal beams (53, 53.1, 53.2) have at their end-face end (63) a connecting strap (75), which extends underneath the tread surface plate (65) in transverse direction, is formed integrally with the longitudinal beams (53, 53.1, 53.2) and is physically separate from the longitudinal stiffening profile and
- which is fixedly connected with the lower limb (84) of the transverse reinforcing profile (50) by at least one of the connecting means having the connecting structures (166, 191.1, 191.2).

2. Gangboard of metal according to one of the other claims, **characterised in that** the upper limb (83) is fixedly connected with the tread surface plate (65), and the side limbs (82, 82.1, 82.2) are connected with the longitudinal beams (53, 53.1, 53.2) respectively by at least one connecting means having the connecting structures.

3. Gangboard of metal according to one of the other claims, **characterised in that** the connecting strap (75) and the lower limb (84) have a mutually matched joining surface enabling simultaneous or sequentially spaced mounting of at least two of the connecting structures.

4. Gangboard of metal according to one of the other claims, **characterised in that** all respective mutually opposite wall parts have joining surfaces which are shaped to be so matched to one another that they enable simultaneous or sequentially spaced mounting of at least two of the connecting structures.

5. Gangboard of metal according to one of the other claims, **characterised in that** the joining surfaces of the mutually opposite wall parts are formed to be substantially parallel and planar in the respective connecting regions prior to the connecting.

6. Gangboard of metal according to one of the other claims, **characterised in that** the end-face front edge (172) of the connecting strap (75) is formed in the region of the end-face end of the lower limb (84).

7. Gangboard of metal according to one of the other claims, **characterised in that** the connecting structures are provided substantially in the region of the end-face ends (63) of the longitudinal beams (53, 53.1, 53.2).

8. Gangboard of metal according to one of the other claims, **characterised in that** the connecting strap (75) has a width (176) or depth which approximately corresponds with the depth (113) or width of the lower limb (84).

9. Gangboard of metal according to one of the other claims, **characterised in that** the connecting strap (75) is formed to be trapezium-shaped.

10. Gangboard of metal according to claim 9, **characterised in that** the connecting strap (75) is formed with a trapezium base edge (171), which is arranged in the transition region to the adjacent wall parts of the longitudinal beam (53, 53.1, 53.2) and the width (176) of which approximately corresponds with the depth (113) of the lower limb (84) of the transverse stiffening profile (50).

11. Gangboard of metal according to at least one of claims 9 and 10, **characterised in that** the connecting strap (75) is formed with a trapezium oblique edge (174) constructed with a forward inclination.

12. Gangboard of metal according to at least one of claims 9 to 11, **characterised in that** the transitions of the trapezium edges (171, 172, 173, 174) are formed to be radiused.

13. Gangboard of metal according to one of the other claims, **characterised in that** the transition region of the connecting strap (75) is formed to be radiused with respect to the adjoining wall parts of the longitudinal beam (53, 53.1, 53.2).

14. Gangboard of metal according to one of the other claims, **characterised in that** the connecting strap (75) engages below the lower limb (84) of the transverse reinforcing profile (50).

15. Gangboard of metal according to one of the other claims, **characterised in that** the transverse reinforcing profile (50) is connected with the connecting strap (75) by at least two connecting means which are spaced apart in the direction of the longitudinal axis of the gangboard (45, 45.1, 45.2) and which have the connecting structures (191.1, 191.2).

16. Gangboard of metal according to claim 15, **characterised in that** the adjacent connecting structures (191.1, 191.2) have a spacing (192) from one another which corresponds with 10 to 15 times the wall thickness (175) of the connecting strap (75) and/or the wall thickness (106) of the transverse reinforcing profile (50) in the overlapping region.

17. Gangboard of metal according to claim 15, **characterised in that** the adjacent connecting structures (191.1, 191.2) have a spacing (192) from one another which corresponds with approximately 0.4 to 0.5 times the depth (113) of the lower limb (84) of the transverse reinforcing profile (50).

18. Gangboard of metal according to one of the other claims, **characterised in that** the connecting structures (191.1, 191.2) are arranged symmetrically with respect to the transverse axis (194) of the transverse reinforcing profile (50).

19. Gangboard of metal according to one of the other claims, **characterised in that** the connecting structures (191.1, 191.2) have a spacing (193) from the vertical outer surfaces (89) of the longitudinal beams (53, 53.1, 53.2) which approximately corresponds with the spacing (192) between the adjacent connecting structures.

20. Gangboard of metal according to one of the other claims, **characterised in that** the side limbs (82) are formed to be rectangular.

21. Gangboard of metal according to one of the other claims, **characterised in that** the side limbs (82) are connected with the longitudinal beams (53, 53.1, 53.2) by three connecting structures (196.1, 196.2, 196.3) arranged triangularly relative to one another.

22. Gangboard of metal according to claim 21, **characterised in that** two connecting structures (196.1, 196.2) of the three connecting structures (196.1, 196.2, 196.3) are aligned approximately parallel to the longitudinal axis of the gangboard (45) and arranged below the third connecting structure (196.3).

23. Gangboard of metal according to claim 22, **characterised in that** the two lower connecting structures (196.1, 196.2) have a spacing (197) from one another which approximately corresponds with the depth (113) of the lower limb (84) of the transverse reinforcing profile (50).

24. Gangboard of metal according to at least one of claims 22 and 23, **characterised in that** the connecting structures (196.1), which are arranged at the end face, have a spacing (199) from the end-face end (99) of the side limb (82, 82.1, 82.2) or from the vertical outer wall (81) which approximately corresponds with the spacing (198) of the third connecting structure (196.3) from the lower connecting structures (196.1, 196.2).

25. Gangboard of metal according to at least one of claims 21 to 24, **characterised in that** the three connecting structures (196.1, 196.2, 196.3) are arranged in such a manner that an equilateral triangle is formed.

26. Gangboard of metal according to at least one of claims 22 to 25, **characterised in that** the lower connecting structures (196.1, 196.2) have a spacing (201) from the lower end edge (117) of the side limbs (82, 82.1, 82.2) or from the lower limb (84) of the transverse reinforcing profile (50) which approximately corresponds with the spacing (199) of the end-face connecting structure (196.1) from the end-face end (99) of the side limbs (82, 82.1, 82.2).

27. Gangboard of metal according to one of the other claims, **characterised in that** the transverse limbs (83) are formed to be rectangular.

28. Gangboard of metal according to one of the other claims, **characterised in that** the upper limb (83) is connected with the tread surface plate (65) by three connecting structures (203.1, 203.2, 203.3) arranged parallel to the end edge (80) of the tread surface plate (65) and in a row.

29. Gangboard of metal according to one of the other claims, **characterised in that** the connecting structures (203.1, 203.2, 203.3) have a spacing (204) from the end edge (80) of the tread surface plate (65) which approximately corresponds with 6 to 9 times the wall thickness (187) of the tread surface plate (65) in the connecting region.

30. Gangboard of metal according to one of the other claims, **characterised in that** the connecting means are constructed for connection of the transverse reinforcing profiles (50) with the longitudinal beams (53, 53.1, 53.2) and/or the tread surface plate (65) directly by connecting structures (166; 191.1, 191.2; 196.1, 196.2, 196.3; 203.1, 203.2, 203.3), which are producible fully automatically and formed by hot-material or cold-material flow, which is induced electrically and/or by pressure forces, of each of the wall parts.

31. Gangboard of metal according to one of the other claims, **characterised in that** the connecting structures (166; 191.1, 191.2; 196.1, 196.2, 196.3; 203.1, 203.2, 203.3) are constructed exclusively with the mutually opposite wall parts (161, 162).

32. Gangboard of metal according to one of the other claims, **characterised in that** the connecting structures (166; 191.1, 191.2; 196.1, 196.2, 196.3; 203.1, 203.2, 203.3) do not protrude beyond the free surfaces (167, 168) of the interconnected wall parts (161, 162).

33. Gangboard of metal according to one of the other claims, **characterised in that** the mutually opposite wall parts (161, 162) each consist of steel or light metal, particularly of aluminium.

## Revendications

1. Plancher en métal pour des échafaudages, des consoles, des estrades, et similaires présentant les caractéristiques suivantes :
- le plancher (45, 45.1, 45.2) présente une tôle de surface de marche (65) et au moins deux longerons (53, 53.1, 53.2) reliés de façon fixe à cette tôle avec section en forme de support ;
- les longerons (53, 53.1, 53.2) sont conçus avec un profilé de renfort longitudinal disposé au-dessous de la tôle de surface de marche (65) ;
- le plancher présente des moyens auxiliaires d'accrochage ;
- des profilés de renfort transversaux (50) sont prévus dans la zone des côtés avant du plancher (45, 45.1, 45.2) ;
- les profilés de renfort transversaux (50) ont des branches supérieures (83), des branches inférieures (84) et/ou des branches latérales (82, 82.1, 82.2) ;
- les profilés de renfort transversaux (50) présentent avec les longerons (53, 53.1, 53.2) et la tôle de surface de marche (65) des parties de paroi qui se font face en formant des zones de chevauchement ;
- la branche supérieure (83) est reliée de façon fixe à la tôle de surface de marche (65) et
- la branche inférieure (84) et/ou les branches latérales (82, 82.1, 82.2) sont reliées de façon fixe aux longerons (53, 53.1, 53.2) dans les zones de liaison (156, 157, 165) contenant les zones de chevauchement au moyen d'outils d'assemblage permettant une liaison de ces parties de paroi par des moyens de liaison ;
- les zones de liaison sont conçues à chaque fois de façon délimitée localement ;
**caractérisé en ce que**
- au moins l'une des parties de paroi qui se font face est conçue sans pré-perçage et/ou sans pré-séparation avant la liaison dans la zone de liaison,
- les moyens de liaison pour la liaison des profilés de renfort transversaux (50) avec les longerons (53, 53.1, 53.2) et/ou la zone de surface de marche (65) sont conçus avec des structures de liaison (166 ; 191.1, 191.2 ; 196.1, 196.2, 193.3 ; 203.1, 203.2, 203.3) pouvant être fabriquées de façon entièrement automatisée et formés directement avec l'écoulement de matériau à chaud ou à froid induit électriquement et/ou par des forces de pression d'au moins une de parties de paroi et
- les zones de chevauchement et des parties de paroi voisines présentant une conception et une disposition permettant une fabrication automatique en ce qui concerne l'accessibilité des outils d'assemblage et
- les longerons (53, 53.1, 53.2) présentant sur leur extrémité (63) côté avant une patte de liaison (75) s'étendant au-dessous de la tôle de surface de marche (65) dans le sens transversal, formée d'une seule pièce avec les longerons (53, 53.1, 53.2) et séparée dans l'espace du profilé de renfort longitudinal,
- qui est reliée de façon fixe avec la branche inférieure (84) du profilé de renfort transversal (50) avec au moins l'un des moyens de liaison présentant les structures de liaison (166, 191.1, 191.2).

2. Plancher en métal selon l'une quelconque des autres revendications,
**caractérisé en ce que**
la branche supérieure (83) avec la zone de surface de marche (65) et les branches latérales (82, 82.1, 82.2) avec les longerons (53, 53.1, 53.2) sont reliées de façon fixe respectivement avec au moins l'un des moyens d'assemblage présentant les structures de liaison.

3. Plancher en métal selon l'une quelconque des autres revendications,
**caractérisé en ce que**
la patte de liaison (75) et la branche inférieure (84) présentent une surface d'assemblage adaptée à celles-ci, qui permet le placement espacé simultané ou séquentielle d'au moins deux des structures de liaison.

4. Plancher en métal selon l'une quelconque des autres revendications,
**caractérisé en ce que**
toutes les parties de paroi se faisant face présentent des surfaces d'assemblage qui sont conçues et adaptées réciproquement de telle sorte qu'elles permettent le placement espacé simultané ou séquentiel d'au moins deux des structures de liaison.

5. Plancher en métal selon l'une quelconque des autres revendications,
**caractérisé en ce que**
les surfaces d'assemblage des parties de paroi se faisant face dans les zones de liaison respectives sont sensiblement planes et parallèles avant la liaison.

6. Plancher en métal selon l'une quelconque des autres revendications,
**caractérisé en ce que**
le bord frontal (172) côté avant de la patte de liaison (75) est réalisé dans la zone de l'extrémité côté avant de la branche inférieure (84).

7. Plancher en métal selon l'une quelconque des autres revendications,
**caractérisé en ce que**
les structures de liaison sont prévues essentiellement dans la zone des extrémités (63) côté avant des longerons (53, 53.1, 53.2).

8. Plancher en métal selon l'une quelconque des autres revendications,
**caractérisé en ce que**
la patte de liaison (75) présente une largeur (176) ou une profondeur qui correspond à peu près à la profondeur (113) ou à la largeur de la branche intérieure (84).

9. Plancher en métal selon l'une quelconque des autres revendications,
**caractérisé en ce que**
la patte de liaison (75) a une conception en forme de trapèze.

10. Plancher en métal selon la revendication 9,
**caractérisé en ce que**
la patte de liaison (75) est conçue avec un bord de base de trapèze (171) disposé dans la zone de transition avec les parties de paroi voisines du longeron (53, 53.1, 53.2), dont la largeur (176) correspond à peu près à la profondeur (113) de la branche inférieure (84) du profilé de renfort transversal (50).

11. Plancher en métal selon au moins l'une quelconque des revendications 9 ou 10,
**caractérisé en ce que**
la patte de liaison (75) est conçue avec un bord incliné de trapèze (174) réalisé de façon inclinée vers l'avant.

12. Plancher en métal selon au moins l'une quelconque des revendications 9 à 11,
**caractérisé en ce que**
les transitions des bords de trapèze (171, 172, 173, 174) sont conçues arrondies.

13. Plancher en métal selon l'une quelconque des autres revendications,
**caractérisé en ce que**
la zone de transition de la patte de liaison (75) avec les parties de paroi consécutives du longeron (53, 53.1, 53.2) est conçue arrondie.

14. Plancher en métal selon l'une quelconque des autres revendications,
**caractérisé en ce que**
la patte de liaison (75) saisit par-dessous la branche inférieure (84) du profilé de renfort transversal (50).

15. Plancher en métal selon l'une quelconque des autres revendications,
**caractérisé en ce que**
le profilé de renfort transversal (50) est relié par au moins deux moyens de liaison espacés en direction de l'axe longitudinal du plancher (45, 45.1, 45.2) et présentant les structures de liaison (191.1, 191.2) à la patte de liaison (75).

16. Plancher en métal selon la revendication 15,
**caractérisé en ce que**
les structures de liaison (191.1, 191.2) voisines présentent entre elles un espacement (192) qui correspond à 10 jusqu'à 15 fois l'épaisseur de paroi (175) de la patte de liaison (75) et/ou l'épaisseur de paroi (106) du profilé de renfort transversal (50) dans la zone de chevauchement.

17. Plancher en métal selon la revendication 15,
**caractérisé en ce que**
les structures de liaison (191.1, 191.2) voisines présentent un espacement (192) qui correspond à peu près à 0,4 à 0,5 fois la profondeur (113) de la branche inférieure (84) du profilé de renfort transversal (50).

18. Plancher en métal selon l'une quelconque des autres revendications,
**caractérisé en ce que**
les structures de liaison (191.1, 191.2) sont disposées de façon symétrique par rapport à l'axe transversal (194) du profilé de renfort transversal (50).

19. Plancher en métal selon l'une quelconque des autres revendications,
**caractérisé en ce que**
les structures de liaison (191.1, 191.2) présentent par rapport aux surfaces extérieures (89) verticales des longerons (53, 53.1, 53.2) une distance (193) qui correspond à peu près à la distance (192) entre les structures de liaison voisines.

20. Plancher en métal selon l'une quelconque des autres revendications,
**caractérisé en ce que**
les branches latérales (82) sont conçues avec une forme rectangulaire.

21. Plancher en métal selon l'une quelconque des autres revendications,
**caractérisé en ce que**
les branches latérales (82) sont reliées aux longerons (53, 53.1, 53.2) par trois structures de liaison (196.1, 196.2, 196.3) disposées en forme de triangle les unes par rapport aux autres.

22. Plancher en métal selon la revendication 21,
**caractérisé en ce que**
deux structures de liaison (196.1, 196.2) des trois structures de liaison (196.1, 196.2, 196.3) sont orientées à peu près parallèlement à l'axe longitudinal du plancher (45) et sont disposées au-dessous de la troisième structure de liaison (196.3).

23. Plancher en métal selon la revendication 22,
**caractérisé en ce que**
les deux structures de liaison (196.1, 196.2) inférieures présentent l'une par rapport à l'autre une distance (197) qui correspond à peu près à la profondeur (113) des branches inférieures (84) du profilé de renfort transversal (50).

24. Plancher en métal selon au moins l'une quelconque des revendications 22 ou 23,
**caractérisé en ce que**
les structures de liaison (196.1) disposées côté avant présentent par rapport à l'extrémité (99) côté avant de la branche latérale (82, 82.1, 82.2) ou à la paroi extérieure verticale (81) une distance (199) qui correspond à peu près à la distance (198) de la troisième structure de liaison (196.3) aux structures de liaison (196.1, 196.2) inférieures.

25. Plancher en métal selon au moins l'une quelconque des revendications 21 à 24,
**caractérisé en ce que**
les trois structures de liaison (196.1, 196.2, 196.3) sont disposées de telle sorte qu'un triangle équilatéral est formé.

26. Plancher en métal selon au moins l'une quelconque des revendications 22 à 25,
**caractérisé en ce que**
les structures de liaison (196.1, 196.2) inférieures présentent par rapport au bord avant (117) inférieur des branches latérales (82, 82.1, 82.2) ou à la branche inférieure (84) du profilé de renfort transversal (50) une distance (201) qui correspond à peu près à la distance (199) de la structure de liaison (196.1) côté avant à l'extrémité (99) côté avant des branches latérales (82, 82.1, 82.2).

27. Plancher en métal selon l'une quelconque des autres revendications,
**caractérisé en ce que**
les branches latérales (83) sont conçues avec une forme rectangulaire.

28. Plancher en métal selon l'une quelconque des autres revendications,
**caractérisé en ce que**
la branche supérieure (83) est reliée par trois structures de liaison (203.1, 203.2, 203.3) disposées parallèlement au bord avant (80) de la tôle de surface de marche (65) et dans une rangée à la tôle de surface de marche (65).

29. Plancher en métal selon l'une quelconque des autres revendications,
**caractérisé en ce que**
les structures de liaison (203.1, 203.2, 203.3) présentent par rapport au bord avant (80) de la tôle de surface de marche (65) une distance (204) qui correspond à peu près à 6 fois jusqu'à 9 fois l'épaisseur de paroi (187) de la tôle de surface de marche (65) dans la zone de liaison.

30. Plancher en métal selon l'une quelconque des autres revendications,
**caractérisé en ce que**
les moyens de liaison pour la liaison des profilés de renfort transversaux (50) avec les longerons (53, 53.1, 53.2) et/ou la tôle de surface de marche (65) sont conçus avec des structures de liaison (166 ; 191.1, 191.2 ; 196.1, 196.2, 196.3 ; 203.1, 203.2, 203.3) pouvant être fabriquées de façon entièrement automatisée et formées directement par écoulement de matériau à chaud ou à froid induit électriquement et/ou par des forces de pression de chacune des parties de paroi.

31. Plancher en métal selon l'une quelconque des autres revendications,
**caractérisé en ce que**,
les structures de liaison (166 ; 191.1, 191.2 ; 196.1, 196.2, 196.3 ; 203.1, 203.2, 203.3) sont réalisées exclusivement avec les parties de paroi (161, 162) se faisant face.

32. Plancher en métal selon l'une quelconque des autres revendications,
**caractérisé en ce que**
les structures de liaison (166 ; 191.1, 191.2 ; 196.1, 196.2, 196.3 ; 203.1, 203.2, 203.3) ne dépassent pas des surfaces (167, 168) libres des parties de paroi (161, 162) reliées entre elles.

33. Plancher en métal selon l'une quelconque des autres revendications,
**caractérisé en ce que**
les parties de paroi (161, 162) se faisant face sont chacune à base d'acier ou de métal léger, en particulier à base d'aluminium.
